(19)

Europäisches
Patentamt
European
Patent Office
Office européen
des brevets

(11) **EP 4 044 112 B1**

(12) **EUROPEAN PATENT SPECIFICATION**

(45) Date of publication and mention
of the grant of the patent:
**04.06.2025 Bulletin 2025/23**

(21) Application number: **20883159.4**

(22) Date of filing: **04.09.2020**

(51) International Patent Classification (IPC):
*G06T 7/00* *(2017.01)* *G06T 7/90* *(2017.01)*
*G06V 20/56* *(2022.01)* *G06V 10/764* *(2022.01)*
*G06V 10/56* *(2022.01)*

(52) Cooperative Patent Classification (CPC):
**G06T 7/90; G06T 7/00; G06V 10/56; G06V 10/764;
G06V 20/56;** G06T 2207/10016; G06T 2207/10024;
G06T 2207/20076; G06T 2207/30252

(86) International application number:
**PCT/CN2020/113630**

(87) International publication number:
**WO 2021/082735 (06.05.2021 Gazette 2021/18)**

(54) **FOG FEATURE RECOGNITION METHOD, APPARATUS, AND RELATED DEVICE**

VERFAHREN ZUR ERKENNUNG VON NEBELEIGENSCHAFTEN, GERÄT UND ZUGEHÖRIGE
VORRICHTUNG

PROCÉDÉ DE RECONNAISSANCE DE CARACTÉRISTIQUES DE BROUILLARD, APPAREIL ET
DISPOSITIF ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.10.2019 CN 201911056178**

(43) Date of publication of application:
**17.08.2022 Bulletin 2022/33**

(73) Proprietor: **Shenzhen Yinwang Intelligent
Technologies Co., Ltd.
Shenzhen, Guangdong 518129 (CN)**

(72) Inventors:
 • **ZHANG, Junhao
 Shenzhen, Guangdong 518129 (CN)**
 • **HUANG, Wei
 Shenzhen, Guangdong 518129 (CN)**
 • **LIU, Gang
 Shenzhen, Guangdong 518129 (CN)**
 • **HE, Yanshan
 Shenzhen, Guangdong 518129 (CN)**
 • **TIAN, Yong
 Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(56) References cited:
**CN-A- 102 779 349      CN-A- 104 766 286
CN-A- 106 127 706      CN-A- 108 230 288
CN-A- 108 621 918      CN-A- 109 389 132
US-A1- 2010 158 378**

• JIANG YUTONG ET AL: "Fog Density Estimation
and Image Defogging Based on Surrogate
Modeling for Optical Depth", IEEE
TRANSACTIONS ON IMAGE PROCESSING,
IEEE, USA, vol. 26, no. 7, 1 July 2017
(2017-07-01), pages 3397 - 3409, XP011650032,
ISSN: 1057-7149, [retrieved on 20170522], DOI:
10.1109/TIP.2017.2700720

**(Cont. next page)**

- **FAN XUE ET AL: "Haze weather recognition based on multiple features and Random Forest", 2018 INTERNATIONAL CONFERENCE ON SECURITY, PATTERN ANALYSIS, AND CYBERNETICS (SPAC), IEEE, 14 December 2018 (2018-12-14), pages 485 - 488, XP033693710, DOI: 10.1109/SPAC46244.2018.8965544**

- **MARIO PAVLIC ET AL: "Image based fog detection in vehicles", INTELLIGENT VEHICLES SYMPOSIUM (IV), 2012 IEEE, IEEE, 3 June 2012 (2012-06-03), pages 1132 - 1137, XP032453047, ISBN: 978-1-4673-2119-8, DOI: 10.1109/ IVS.2012.6232256**

- **FAN XUE ET AL: "Haze weather recognition based on multiple features and Random Forest", 2018 INTERNATIONAL CONFERENCE ON SECURITY, PATTERN ANALYSIS, AND CYBERNETICS (SPAC), IEEE, 14 December 2018 (2018-12-14), pages 485 - 488, XP033693710, DOI: 10.1109/SPAC46244.2018.8965544**

- **MARIO PAVLIC ET AL: "Image based fog detection in vehicles", INTELLIGENT VEHICLES SYMPOSIUM (IV), 2012 IEEE, IEEE, 3 June 2012 (2012-06-03), pages 1132 - 1137, XP032453047, ISBN: 978-1-4673-2119-8, DOI: 10.1109/ IVS.2012.6232256**

## Description

This application claims priority to Chinese Patent Application No. 201911056178.7, filed with the China National Intellectual Property Administration on October 31, 2019 and entitled "FOG FEATURE IDENTIFICATION METHOD AND APPARATUS, AND RELATED DEVICE".

## TECHNICAL FIELD

The present invention relates to the field of intelligent vehicles, and in particular, to a fog feature identification method and apparatus, and a related device.

## BACKGROUND

In a vehicle running process, bad weather is often a major hidden danger to traffic safety. Of the 327,209 traffic accidents reported by the National Bureau of Statistics in 2018, 34.7% occurred in bad weather, especially foggy weather. Low visibility in foggy weather and irregular use of lights of driving vehicles cause a driver's line of sight to be blocked, and consequently traffic accidents occur. In this regard, the State has clearly specified how to regulate the use of fog lights in the "Regulation on the Implementation of the Road Traffic Safety Law of the People's Republic of China", as follows:

Article 81 The motor vehicle running on the highway shall observe the following provisions when encountering low-visibility weather conditions such as fog, snow, sand dust, and hail:

(1) When the visibility is less than 200 meters, turn on the fog lights, low beam lights, side marker lights, and front and rear position lights, the speed shall not exceed 60 kilometers per hour, and keep a distance of more than 100 meters from the vehicle ahead in the same lane.

(2) When the visibility is less than 100 meters, turn on the fog lights, low beam lights, side marker lights, front and rear position lights, and hazard lights, the speed shall not exceed 40 kilometers per hour, and keep a distance of more than 50 meters from the vehicle ahead in the same lane.

(3) When the visibility is less than 50 meters, turn on the fog lights, low beam lights, side marker lights, front and rear position lights, and hazard lights, the speed shall not exceed 20 kilometers per hour, and leave the highway as soon as possible from the nearest intersection.

In the scenarios specified in the foregoing, the highway management department shall issue prompt information such as speed limit and vehicle distance maintenance through displays and the like. Therefore, correct use of the fog lights is particularly important for improving driving safety and driving experience of the driver. However, most of current technologies on the market are aimed at adjusting vehicle headlights, and research work on fog lights is still lacking.

To ensure that the driver correctly uses the fog lights in foggy weather or a fog light/related lighting device is accurately used in some other foggy scenarios, how to accurately and effectively identify a fog feature in an environment, to provide a related personnel or device with a warning to turn on the fog light/related lighting device is an urgent problem to be resolved.

Document JIANG YUTONG ET AL "Fog Density Estimation and Image Defogging Based on Surrogate Modeling for Optical Depth", IEEE TRANSACTIONS ON IMAGE PROCESSING, vol. 26, no. 7, 1 July 2017, pages 3397 - 3409 generally discloses a surrogate-based method to learn a refined polynomial regression model for optical depth with informative fog-relevant features such as dark-channel, saturation-value, and chroma which are selected on the basis of sensitivity analysis.

Document FAN XUE ET AL: "Haze weather recognition based on multiple features and Random Forest", 2018 International Conference on Security, Pattern Analysis, and Cybernetics (SPAC), IEEE, 14 December 2018, pages 485 - 488 generally proposes multiple features and Random Forest based haze weather classification method for any scenario to improve the detection accuracy.

Document MARIO PAVLIC ET AL: "Image based fog detection in vehicles", 2012 Intelligent Vehicles Symposium, IEEE, 3 June 2012, pages 1132 - 1137 generally proposes to use image descriptors and a classification procedure in order to distinguish images with fog present from those free of fog.

## SUMMARY

Embodiments of the present invention provide a fog feature identification method and apparatus, and a related device, to more intelligently and accurately identify whether there is fog in a current environment. In particular, embodiments of the present application are defined by the independent claims. Additional features of embodiments of the application are presented in the dependent claims. Embodiments of the present application (or the present disclosure) provide a fog feature identification method, a fog feature identification apparatus, a computer-readable storage medium, and a computer program.

According to a first aspect, the present invention provides a fog feature identification method according to claim 1.

The fog feature information in the target image is determined based on both a grayscale feature of a dark channel and a color feature of the HSV color space image of the target image, to further determine whether there is fog in an environment corresponding to the target image. Feature information of a plurality of channels is fused, and accuracy of determining the fog feature information is improved. Specifically, when a foggy environment is compared with a fog-free environment, a quantity of pixels with small pixel values in a dark channel image of a foggy image is usually greater than that of a dark channel image of a fog-free image (for example, an overall color of the foggy image is lighter and an overall color of the fog-free image is darker), and a pixel value change of pixels in an HSV color space image of the foggy image is usually smaller than that of an HSV color space image of the fog-free image (for example, the foggy image has smaller fluctuation in the overall color, and the fog-free image has larger fluctuation in the overall color). Therefore, in the present invention, whether there is fog in the environment corresponding to the target image is not determined based on a single channel feature, but is comprehensively determined based on related features that are of the dark channel image and the HSV color space image and are distinct in a foggy situation and a fog-free situation. This implements accurate and efficient fog detection. In specific application scenarios, this embodiment of the present invention may be used to determine whether a photo needs to be defogged, whether a fog light needs to be turned on, whether a related emergency device needs to be turned on, and the like. Optionally, the fog in this application may include a similar phenomenon such as fog, haze, or dust.

In a possible implementation, the determining grayscale feature distribution information in a dark channel image of the target image based on the dark channel image includes: determining pixel values of pixels in the dark channel image of the target image, and counting a ratio of a quantity of pixels corresponding to each pixel value to a total quantity of pixels in the dark channel image.

In this embodiment of the present invention, when the foggy environment is compared with the fog-free environment, the quantity of pixels with small pixel values in the dark channel image of the foggy image is usually greater than that of the dark channel image of the fog-free image (for example, the overall color of the foggy image is lighter and the overall color of the fog-free image is darker). In other words, pixel values of pixels in the dark channel image of the foggy image are usually small, so that pixels with small pixel values occupy a majority of the pixels. Therefore, statistics information about the ratio of the quantity of pixels corresponding to each pixel value to the total quantity of pixels in the dark channel image of the target image may be used as an important criterion for determining whether there is fog in the environment corresponding to the target image.

In a possible implementation, the HSV color space image of the target image includes a hue H channel, a saturation S channel, and a value V channel, and the determining color feature distribution information in an HSV color space image of the target image based on the HSV color space image includes: determining a standard deviation of pixel values of pixels of at least one channel in the HSV color space image of the target image; and determining color distribution in the HSV color space image based on the standard deviation of the pixel values of the pixels of the at least one channel.

In this embodiment of the present invention, the pixel value change of the pixels in the HSV color space image of the foggy image is usually smaller than that of the HSV color space image of the fog-free image (for example, the foggy image has smaller fluctuation in the overall color, and the fog-free image has larger fluctuation in the overall color). In other words, the pixel value change of the pixels in the HSV color space image of the foggy image is usually small, causing a small variance or standard deviation of the pixel values. Therefore, the standard deviation of the pixel values of the pixels of the at least one channel in the HSV color space image of the target image may also be used as an important criterion for determining whether there is fog in the environment corresponding to the target image.

In a possible implementation, the HSV color space image of the target image includes a hue H channel, a saturation S channel, and a value V channel, and the determining color feature distribution information in an HSV color space image of the target image based on the HSV color space image includes: determining a standard deviation and an average value of pixel values of pixels of at least one channel in the HSV color space image of the target image; and determining color distribution in the HSV color space image based on the standard deviation and the average value of the pixel values of the pixels of the at least one channel.

In this embodiment of the present invention, the pixel value change of the pixels in the HSV color space image of the foggy image is usually smaller than that of the HSV color space image of the fog-free image (for example, the foggy image has smaller fluctuation in the overall color, and the fog-free image has larger fluctuation in the overall color). In other words, the pixel value change of the pixels in the HSV color space image of the foggy image is usually small, causing a small variance or standard deviation of the pixel values. Further, a ratio of the standard deviation to the average value enlarges change amplitude of the pixel values, so that the pixel value change can be determined more accurately. Therefore, the standard deviation and the average value of the pixel values of the pixels of the at least one channel in the HSV color space image of the target image may also be used as important criteria for determining whether there is fog in the environment corresponding to the target image.

In a possible implementation, the determining color feature distribution information in an HSV color space image of the target image based on the HSV color space image includes: determining a standard deviation and an average value of pixel values of pixels of an S channel, and a standard deviation and an average value of pixel values of pixels of a V channel of the HSV color space image of the target image; and determining color distribution in the HSV color space image based on the standard deviation and the average value of the pixel values of the pixels of the S channel and the standard deviation and the average value of the pixel values of the pixels of the V channel.

In this embodiment of the present invention, the pixel value change of the pixels in the HSV color space image of the foggy image is usually smaller than that of the HSV color space image of the fog-free image (for example, the foggy image has smaller fluctuation in the overall color, and the fog-free image has larger fluctuation in the overall color). In other words, the pixel value change of the pixels in the HSV color space image of the foggy image is usually small, causing a small variance or standard deviation of the pixel values. In addition, among the three channels (the H channel, the S channel, and the V channel) of the HSV color space image, the S channel and the V channel each are distinct in the foggy situation and the fog-free situation. Further, a ratio of the standard deviation to the average value enlarges change amplitude of the pixel values, so that the pixel value change can be determined more accurately. Therefore, the standard deviation and the average value of the pixel values of the pixels of the S channel and the standard deviation and the average value of the pixel values of the pixels of the V channel may also be used as important criteria for determining whether there is fog in the environment corresponding to the target image.

The determining fog feature information in the target image based on the grayscale feature distribution information and the color feature distribution information includes: calculating a first metric value of a fog feature in the dark channel image based on the ratio of the quantity of pixels corresponding to each pixel value to the total quantity of pixels in the dark channel image, and calculating a second metric value of a fog feature in the HSV color space image based on the color distribution in the HSV color space image; and determining the fog feature information in the target image based on the first metric value and the second metric value.

According to the present invention, the metric values of the fog features in the target image are separately calculated in different dimensions based on the ratio of the quantity of pixels corresponding to each pixel value in the dark channel image of the target image to the total quantity of pixels in the dark channel image and the color distribution in the HSV color space image determined in a plurality of manners. That is, density of fog in the image is determined in different dimensions. Finally, the fog feature information, for example, whether there is fog or density of fog in the corresponding environment, in the environment corresponding to the target image is comprehensively determined based on the metric values of the fog features in the two dimensions.

In an implementation, the determining grayscale feature distribution information in a dark channel image of the target image based on the dark channel image includes: counting, based on the dark channel image of the target image, a probability p($x_i$|d) that a pixel value of each pixel in the dark channel image falls within a pixel value interval to which the pixel value belongs, where

$$\mathrm{p}(x_i|\mathrm{d}) = \frac{sum(x_i)}{sum(x_{i \in d})},$$

$x_i$ is a pixel whose pixel value is i in the dark channel image, sum ($x_i$) is a total quantity of pixels whose pixel value is i in the dark channel image, $x_{i \in d}$ is a pixel whose pixel value falls within a corresponding pixel value interval d in the dark channel image, $sum(x_{i \in d})$ is a total quantity of pixels whose pixel values fall within a pixel value interval to which the pixel value belongs in the dark channel image, and d includes a pixel value interval [0, N] and a pixel value interval (N, 255], where N is a preset pixel value threshold, 0 < N < 255, $0 \leq i \leq 255$, and both N and i are integers.

In this embodiment of the present invention, a ratio of a quantity of pixels corresponding to each pixel value in two pixel value intervals that use a preset pixel value threshold as a boundary point to a corresponding total quantity of pixels in each pixel value interval to which the pixel value belongs is counted. In addition, the ratio is determined as the grayscale feature distribution information in the dark channel image of the target image, and may be finally used as an important criterion for determining whether there is fog in the environment corresponding to the target image.

In an implementation, the determining color feature distribution information in an HSV color space image of the target image based on the HSV color space image includes: calculating a saturation coefficient of variation $Q_s = \frac{\sigma(HSV_s)}{\mu(HSV_s)}$ and a value coefficient of variation $Q_v = \frac{\sigma(HSV_v)}{\mu(HSV_v)}$ of the HSV color space image of the target image based on the HSV color space image, where $\sigma(HSV_s)$ is a standard deviation of pixel values of pixels of an S channel in the HSV color space image, $\mu(HSV_s)$ is an average value of the pixel values of the pixels of the S channel in the HSV color space image, $\sigma(HSV_v)$ is a standard deviation of pixel values of pixels of a V channel in the HSV color space image, and $\mu(HSV_v)$ is an average value of pixel values of pixels of the V channel in the HSV color space image.

In the present invention, the standard deviation and the average value of the pixel values of the pixels of each of the S channel and the V channel in the HSV color space image are calculated, to separately obtain the coefficients of variation of the S channel and the V channel through calculation. That is, the pixel value change of the pixels in the HSV color space image is further quantified. The coefficients of variation are determined as the color feature distribution information in the HSV color space image of the target image, and may be finally used as important criteria for determining whether there is fog in the environment corresponding to the target image.

In an implementation, the determining fog feature information in the target image based on the grayscale feature distribution information and the color feature distribution information includes: calculating a first metric $E_1$ of a fog feature in the dark channel image according to a formula $E_1 = -\Sigma_{x_i \in w}\, p(x_i|d)\, \ln p(x_i|d)$ based on the probability $p(x_i|d)$ that a pixel value of each pixel in the dark channel image falls within a pixel value interval to which the pixel value belongs, where
w is all pixels in the dark channel image; calculating a second metric value $E_2$ of a fog feature in the HSV color space image according to a formula $E_2 = e^{-\sqrt{Q_s^2 + Q_v^2}}$ based on the saturation coefficient of variation $Q_s = \dfrac{\sigma(HSV_s)}{\mu(HSV_s)}$ and the value coefficient of variation $Q_v = \dfrac{\sigma(HSV_v)}{\mu(HSV_v)}$ of the HSV color space image, where e is the natural constant; calculating a total metric value of the fog feature in the target image according to a formula $E = aE_1 + bE_2$, where a and b are weight factors of $E_1$ and $E_2$ respectively, a + b = 1, a > 0, and b > 0; and if $E \le \tau_0$, determining that there is fog in an environment corresponding to the target image, where $\tau_0$ is a preset energy threshold, and $0 \le \tau_0 \le 1$.

In this embodiment of the present invention, the ratio of the quantity of pixels corresponding to each pixel value in the two pixel value intervals that use the preset pixel value threshold as a boundary point to the corresponding total quantity of pixels in each pixel value interval to which the pixel value belongs is counted, and the first metric value of the fog feature in the dark channel image of the target image is calculated based on the ratio. The standard deviation and the average value of the pixel values of the pixels of each of the S channel and the V channel in the HSV color space image are calculated, to separately obtain the coefficients of variation of the S channel and the V channel through calculation, and the second metric value of the fog feature in the HSV color space image of the target image is calculated based on the coefficients of variation. In other words, the metric values of the fog features in the target image are separately calculated in different dimensions, and density of fog in the image is determined in different dimensions. Finally, the fog feature information, for example, whether there is fog or density of fog in the corresponding environment, in the environment corresponding to the target image is comprehensively determined based on the metric values of the fog features in the two dimensions.

In a possible implementation, the method further includes: determining a fog probability coefficient $s_1$ of a geographic location of the environment corresponding to the target image and a fog probability coefficient $s_2$ of weather; and determining $\tau_0$ according to a formula $\tau_0 = \tau_0 e^{-\sqrt{\alpha_1 s_1^2 + \alpha_2 s_2^2}}$, where $\alpha_1$ and $\alpha_2$ are weight factors of $s_1$ and $s_2$ respectively, and $\alpha_1 + \alpha_2 = 1$, $\alpha_1 > 0$, $\alpha_2 > 0$.

In this example of the present invention, the preset energy threshold $\tau_0$ may be determined or updated in real time based on impact of a geographic location and weather on whether there is fog in an environment, to improve determining accuracy. For example, a scenic spot is more prone to be foggy than an urban area, and a rainy day is more prone to be foggy than a cloudy day or a sunny day. Therefore, an energy threshold $\tau_0$ in a fog-prone geographic location or weather may be smaller than an energy threshold $\tau_0$ in a geographic location or weather in which fog is not prone to occur, to reduce a misjudgment rate.

In a possible implementation, the method further includes: if it is determined, based on the fog feature information, that there is fog in the environment corresponding to the target image, generating indication information for turning on a fog light, or controlling to turn on a fog light.

In a specific application scenario, this embodiment of the present invention may be used to determine whether fog lights need to be turned on in a running process of a vehicle, to avoid a safety accident easily caused because a driver does not turn on the fog lights in foggy weather due to misjudgment. This improves driving intelligence and safety, and ensures safety of the driver's life and property.

In a possible implementation, the target image is an image corresponding to a to-be-detected area in captured images, and the to-be-detected area includes one or more of a skyline, a lane line blanking point area, or trees or buildings on both sides of a road.

In this example of the present invention, a region that includes a demarcation line or a region in which a fog feature is easily determined in the captured images is used as the target image in this embodiment of the present invention, to improve identification efficiency and accuracy of the fog feature in the target image. This further improves intelligence and security of the vehicle, and ensures safety of the driver's life and property.

According to a second aspect, the present invention provides a fog feature identification apparatus according to claim 10.

In a possible implementation, the first determining unit is specifically configured to:
determine pixel values of pixels in the dark channel image of the target image, and count a ratio of a quantity of pixels corresponding to each pixel value to a total quantity of pixels in the dark channel image.

In a possible implementation, the HSV color space image of the target image includes a hue H channel, a saturation S channel, and a value V channel. The second determining unit is specifically configured to:

determine a standard deviation of pixel values of pixels of at least one channel in the HSV color space image of the target image; and

determine color distribution in the HSV color space image based on the standard deviation of the pixel values of the pixels of the at least one channel.

In an implementation, the HSV color space image of the target image includes a hue H channel, a saturation S channel, and a value V channel. The second determining unit is specifically configured to:

determine a standard deviation and an average value of pixel values of pixels of at least one channel in the HSV color space image of the target image; and determine color distribution in the HSV color space image based on the standard deviation and the average value of the pixel values of the pixels of the at least one channel.

In a possible implementation, the second determining unit is specifically configured to:

determine a standard deviation and an average value of pixel values of pixels of an S channel, and a standard deviation and an average value of pixel values of pixels of a V channel of the HSV color space image of the target image; and determine color distribution in the HSV color space image based on the standard deviation and the average value of the pixel values of the pixels of the S channel and the standard deviation and the average value of the pixel values of the pixels of the V channel.

In a possible implementation, the second determining unit is specifically configured to:

calculate a first metric value of a fog feature in the dark channel image based on the ratio of the quantity of pixels corresponding to each pixel value to the total quantity of pixels in the dark channel image, and calculate a second metric value of a fog feature in the HSV color space image based on the color distribution in the HSV color space image; and determine the fog feature information in the target image based on the first metric value and the second metric value.

In a possible implementation, the first determining unit is specifically configured to:

count, based on the dark channel image of the target image, a probability $p(x_i|d)$ that a pixel value of each pixel in the dark channel image falls within a pixel value interval to which the pixel value belongs, where

$$p(x_i|d) = \frac{sum(x_i)}{sum(x_{i \in d})},$$ $x_i$ is a pixel whose pixel value is i in the dark channel image, sum $(x_i)$ is a total quantity of pixels whose pixel value is i in the dark channel image, $x_{i \in d}$ is a pixel whose pixel value falls within a corresponding pixel value interval d in the dark channel image, $sum(x_{i \in d})$ is a total quantity of pixels whose pixel values fall within a pixel value interval to which the pixel value belongs in the dark channel image, and d includes a pixel value interval [0, N] and a pixel value interval (N, 255], where N is a preset pixel value threshold, $0 < N < 255$, $0 \leq i \leq 255$, and both N and i are integers.

In a possible implementation, the second determining unit is specifically configured to:

calculate a saturation coefficient of variation $Q_s = \frac{\sigma(HSV_s)}{\mu(HSV_s)}$ and a value coefficient of variation $Q_v = \frac{\sigma(HSV_v)}{\mu(HSV_v)}$ of the HSV color space image of the target image based on the HSV color space image, where

$\sigma(HSV_s)$ is a standard deviation of pixel values of pixels of an S channel in the HSV color space image, $\mu(HSV_s)$ is an average value of the pixel values of the pixels of the S channel in the HSV color space image, $\sigma(HSV_v)$ is a standard deviation of pixel values of pixels of a V channel in the HSV color space image, and $\mu(HSV_v)$ is an average value of pixel values of pixels of the V channel in the HSV color space image.

In a possible implementation, the third determining unit is specifically configured to:

calculate a first metric $E_1$ of a fog feature in the dark channel image according to a formula $E_1 = - \Sigma_{x_i \in w} p(x_i|d) \ln p(x_i|d)$ based on the probability $p(x_i|d)$ that a pixel value of each pixel in the dark channel image falls within a pixel value interval to which the pixel value belongs, where w is all pixels in the dark channel image;

calculate a second metric value $E_2$ of the fog feature in the HSV color space image according to a formula

$$E_2 = e^{-\sqrt{Q_s^2 + Q_v^2}}$$ based on the saturation coefficient of variation $Q_s = \frac{\sigma(HSV_s)}{\mu(HSV_s)}$ and the value coefficient of variation $Q_v = \frac{\sigma(HSV_v)}{\mu(HSV_v)}$ of the HSV color space image, where e is the natural constant;

calculate a total metric value of the fog feature in the target image according to a formula $E = aE_1 + bE_2$, where a and b are weight factors of $E_1$ and $E_2$ respectively, $a + b = 1$, $a > 0$, and $b > 0$; and if $E \leq \tau_0$, determine that there is fog in an environment corresponding to the target image, where $\tau_0$ is a

preset energy threshold, and $0 \leq \tau_0 \leq 1$.

In a possible implementation, the apparatus further includes:

a fourth determining unit, configured to determine a fog probability coefficient $s_1$ of a geographic location of the environment corresponding to the target image and a fog probability coefficient $s_2$ of weather; and

a fifth determining unit, configured to determine $\tau_0$ according to a formula $\tau_0 = \tau_0 e^{-\sqrt{\alpha_1 s_1^2 + \alpha_2 s_2^2}}$, where $\alpha_1$ and $\alpha_2$ are weight factors of $s_1$ and $s_2$ respectively, and $\alpha_1 + \alpha_2 = 1$, $\alpha_1 > 0$, $\alpha_2 > 0$.

In a possible implementation, the apparatus further includes:
a fog light indication unit, configured to: if it is determined, based on the fog feature information, that there is fog in the environment corresponding to the target image, generate indication information for turning on a fog light, or control to turn on a fog light.

In a possible implementation, the target image is an image corresponding to a to-be-detected area in captured images, and the to-be-detected area includes one or more of a skyline, a lane line blanking point area, or trees or buildings on both sides of a road.

According to an example of the present invention provides an intelligent vehicle, and the intelligent vehicle may include a processor, a camera module coupled to the processor, and fog lights.

the camera module is configured to capture a target image; and
the processor is configured to:

obtain the target image, and determine grayscale feature distribution information in a dark channel image of the target image based on the dark channel image;
determine color feature distribution information in an HSV color space image of the target image based on the HSV color space image;
determine fog feature information in the target image based on the grayscale feature distribution information and the color feature distribution information; and
if it is determined, based on the fog feature information, that there is fog in the environment corresponding to the target image, generate indication information for turning on the fog lights, or control to turn on the fog lights.

In a possible implementation, the processor is specifically configured to:

determine pixel values of pixels in the dark channel image of the target image, and count a ratio of a quantity of pixels corresponding to each pixel value to a total quantity of pixels in the dark channel image.

In a possible implementation, the HSV color space image of the target image includes a hue H channel, a saturation S channel, and a value V channel. The processor is specifically configured to:

determine a standard deviation of pixel values of pixels of at least one channel in the HSV color space image of the target image; and
determine color distribution in the HSV color space image based on the standard deviation of the pixel values of the pixels of the at least one channel.

In a possible implementation, the HSV color space image of the target image includes a hue H channel, a saturation S channel, and a value V channel. The processor is specifically configured to:

determine a standard deviation and an average value of pixel values of pixels of at least one channel in the HSV color space image of the target image; and
determine color distribution in the HSV color space image based on the standard deviation and the average value of the pixel values of the pixels of the at least one channel.

In a possible implementation, the processor is specifically configured to:

determine a standard deviation and an average value of pixel values of pixels of an S channel, and a standard deviation and an average value of pixel values of pixels of a V channel of the HSV color space image of the target image; and
determine color distribution in the HSV color space image based on the standard deviation and the average value of the pixel values of the pixels of the S channel and the standard deviation and the average value of the pixel values of the pixels of the V channel.

In a possible implementation, the processor is specifically configured to:

calculate a first metric value of a fog feature in the dark channel image based on the ratio of the quantity of pixels corresponding to each pixel value to the total quantity of pixels in the dark channel image, and calculate a second metric value of a fog feature in the HSV color space image based on the color distribution in the HSV color space image; and
determine the fog feature information in the target image based on the first metric value and the second metric value.

In a possible implementation, the processor is specifically configured to:
count, based on the dark channel image of the target image, a probability $p(x_i|d)$ that a pixel value of each pixel in the dark channel image falls within a pixel value interval to which the pixel value belongs, where

$$p(x_i|d) = \frac{sum(x_i)}{sum(x_{i \in d})},$$

$x_i$ is a pixel whose pixel value is i in the dark channel image, sum $(x_i)$ is a total quantity of pixels whose pixel value is i in the dark channel image, $x_{i \in d}$ is a pixel whose pixel value falls within a corresponding pixel value interval d in the dark channel image, sum($x_{i \in d}$) is a total quantity of pixels whose pixel values fall within a pixel value interval to which the pixel value belongs in the dark channel image, and d includes a pixel value interval [0, N] and a pixel value interval (N, 255], where N is a preset pixel value threshold, 0 < N < 255, 0 ≤ i ≤ 255, and both N and i are integers.

In a possible implementation, the processor is specifically configured to:

calculate a saturation coefficient of variation $Q_s = \frac{\sigma(HSV_s)}{\mu(HSV_s)}$ and a value coefficient of variation $Q_v = \frac{\sigma(HSV_v)}{\mu(HSV_v)}$ of the HSV color space image of the target image based on the HSV color space image, where
$\sigma(HSV_s)$ is a standard deviation of pixel values of pixels of an S channel in the HSV color space image, $\mu(HSV_s)$ is an average value of the pixel values of the pixels of the S channel in the HSV color space image, $\sigma(HSV_v)$ is a standard deviation of pixel values of pixels of a V channel in the HSV color space image, and $\mu(HSV_v)$ is an average value of pixel values of pixels of the V channel in the HSV color space image.

In a possible implementation, the processor is specifically configured to:

calculate a first metric $E_1$ of a fog feature in the dark channel image according to a formula $E_1 = - \Sigma_{x_i \in w} p(x_i|d) \ln p(x_i|d)$ based on the probability $p(x_i|d)$ that a pixel value of each pixel in the dark channel image falls within a pixel value interval to which the pixel value belongs, where w is all pixels in the dark channel image;
calculate a second metric value $E_2$ of a fog feature in the HSV color space image according to a formula $E_2 = e^{-\sqrt{Q_s^2 + Q_v^2}}$ based on the saturation coefficient of variation $Q_s = \frac{\sigma(HSV_s)}{\mu(HSV_s)}$ and the value coefficient of variation $Q_v = \frac{\sigma(HSV_v)}{\mu(HSV_v)}$ of the HSV color space image, where e is the natural constant;
calculate a total metric value of the fog feature in the target image according to a formula $E = aE_1 + bE_2$, where a and b are weight factors of $E_1$ and $E_2$ respectively, a + b = 1, a > 0, and b > 0; and
if $E \leq \tau_0$, determine that there is fog in an environment corresponding to the target image, where $\tau_0$ is a preset energy threshold, and $0 \leq \tau_0 \leq 1$.

In a possible implementation, the processor is further configured to:

determine a fog probability coefficient $s_1$ of a geographic location of the environment corresponding to the target image and a fog probability coefficient $s_2$ of weather; and
determine $\tau_0$ according to a formula $\tau_0 = \tau_0 e^{-\sqrt{\alpha_1 s_1^2 + \alpha_2 s_2^2}}$, where $\alpha_1$ and $\alpha_2$ are weight factors of $s_1$ and $s_2$ respectively, and $\alpha_1 + \alpha_2 = 1$, $\alpha_1 > 0$, $\alpha_2 > 0$.

In a possible implementation, the processor is further configured to:
if it is determined, based on the fog feature information, that there is fog in the environment corresponding to the target image, generate indication information for turning on the fog lights, or control to turn on the fog lights.

In an embodiment, the target image is an image corresponding to a to-be-detected area in captured images, and the to-be-detected area includes one or more of a skyline, a lane line blanking point area, or trees or buildings on both sides of a road.

According to a fourth aspect, this application provides a fog feature identification apparatus according to claim 10.

According to an example, this application provides a fog feature identification apparatus. The fog feature identification apparatus includes a processor, and the processor is configured to a corresponding function in any fog feature identification method provided in the first aspect. The fog feature identification apparatus may further include a memory. The memory is configured to be coupled to the processor, and stores program instructions and data that are necessary for the fog feature identification apparatus. The fog feature identification apparatus may further include a communications interface, used by the fog feature identification apparatus to communicate with another device or a communications network.

According to an example, this application provides an intelligent vehicle. The intelligent vehicle includes a processor, and the processor is configured to support the intelligent vehicle in performing a corresponding function in any fog feature identification method provided in the first aspect. The intelligent vehicle may further include a memory, and the memory is configured to be coupled to the processor and stores necessary program instructions and data of the intelligent vehicle. The intelligent vehicle may further include a communications interface, used by the intelligent vehicle to communicate with another device or a communications network.

According to a seventh aspect, this application provides a computer-readable storage medium according to claim 11.

According to an eighth aspect, an embodiment of the present invention provides a computer program according to claim 12.

According to an example, this application provides a chip system. The chip system includes a processor, configured to implement functions related to the fog feature identification method procedure according to any possible implementation of the first aspect. In a possible design, the chip system further includes a memory. The memory is configured to store program instructions and data necessary for the fog feature identification method. The chip system may include a chip, or may include a chip and another discrete device.

## BRIEF DESCRIPTION OF DRAWINGS

FIG. 1 is a schematic diagram of an application scenario of automatically prompting to turn on fog lights of a vehicle according to an embodiment of the present invention;

FIG. 2 is a schematic diagram of an application scenario of automatically prompting to turn on fog lights in a public place according to an embodiment of the present invention;

FIG. 3 is a schematic diagram of an application scenario of automatically turning on street lights in foggy weather according to an embodiment of the present invention;

FIG. 4 is a functional block diagram inside a vehicle according to an embodiment of the present invention;

FIG. 5 is a schematic flowchart of a fog feature identification method according to an embodiment of the present invention;

FIG. 6 is a schematic diagram of determining a target image based on a to-be-detected area according to an embodiment of the present invention;

FIG. 7 is a schematic diagram of generating a dark channel image of a target image according to an embodiment of the present invention;

FIG. 8 is a schematic diagram of generating an HSV color space image of a target image according to an embodiment of the present invention;

FIG. 9 is a flowchart of fog feature identification in a specific application scenario according to an embodiment of the present invention; and

FIG. 10 is a schematic diagram of a structure of a fog feature identification apparatus according to an embodiment of the present invention.

## DESCRIPTION OF EMBODIMENTS

The following describes the embodiments of the present invention with reference to accompanying drawings in the embodiments of the present invention.

In the specification, claims, and accompanying drawings of this application, the terms "first", "second", "third", "fourth", and the like are intended to distinguish between different objects but do not indicate a particular order. In addition, the terms "include", "have", and any other variant thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

Mentioning an "embodiment" in this specification means that a particular characteristic, structure, or feature described with reference to the embodiment may be included in at least one embodiment of this application. The phrase shown in various locations in this specification may not necessarily refer to a same embodiment, and is not an independent or optional embodiment exclusive from another embodiment. It is explicitly and implicitly understood by persons skilled in the art that the embodiments described in this specification may be combined with another embodiment.

The terms such as "component", "module", and "system" used in this specification are used to indicate computer-related entities, hardware, firmware, combinations of hardware and software, software, or software being executed. For example, a component may be, but is not limited to, a process that is run on a processor, a processor, an object, an executable file, a thread of execution, a program, and/or a computer. As shown in figures, both a computing system and an application run on a computing system may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with another system by using the signal).

Some terms in this application are first described, so as to help persons skilled in the art have a better understanding.

(1) Dark channel: The dark channel is a basic assumption that in most non-sky local areas, some pixels always have very low values in least one color channel. This is easy to understand. There are many reasons for this assumption in real life. For example, dark channels of objects such as shadows of vehicles or buildings, or shadows in cities, brightly colored objects or surfaces (for example, green leaves, bright flowers, or blue and green water surface), or darkly colored objects or surfaces are always darker.

(2) Fog feature: The fog feature includes whether there is fog in a current environment, and density of fog, visibility, an area range, duration corresponding to fog, and the like in a foggy situation.

(3) Hue, saturation, value (Hue Saturation Value, HSV) is a color space created based on intuitive features of colors, and is also referred to as a hexcone model (Hexcone Model). Color parameters in this model are hue (H), saturation (S), and value (V). The hue H is measured by angle, and is valued from 0° to 360°. Red, green, and blue differ from each other by 120°. Complementary colors differ from each other by 180°. The saturation S indicates a degree of color purity, and is valued from 0.0 to 1.0. When S is 0, only gray is available. The value V indicates brightness of a color, and is valued from 0.0 (black) to 1.0 (white). Red green blue (Red Green Blue, RGB) and cyan magenta yellow (Cyan Magenta Yellow, CMY) color models are hardware-oriented, and the HSV (Hue Saturation Value, HSV) color model is user-oriented.

(4) The red green blue (RGB) color model is a color standard in the industry. Various colors are obtained by changing red (R), green (G), and blue (B) color channels and overlaying the three color channels. RGB includes the red, green and blue channels. This standard includes almost all colors that can be perceived by human eyes and is one of the most widely used color systems at present.

(5) In the probability theory and statistics, a variation coefficient, also referred to as a "coefficient of variation", is a normalized measure of a probability distribution dispersion degree and is defined as a ratio of a standard deviation to an average value. The coefficient of variation is defined only when the average value is not zero and is generally applicable to a case in which the average value is greater than zero. The coefficient of variation is also known as a standard deviate rate or unit risk.

(6) A conditional probability indicates an occurrence probability of an event A when another event B has occurred. The conditional probability is expressed as: P(A|B), which is read as "probability of A under B". The conditional probability may be calculated by using a decision tree.

First, to facilitate understanding of the embodiments of the present invention, a technical problem to be specifically resolved in this application is further analyzed and proposed. In the conventional technology, a fog feature or fog status detection technology includes a plurality of technical solutions. The following uses two common solutions as examples.

Solution 1: Visual enhancement and visibility warning are performed for driving in foggy weather based on a plurality of sensors. A support vector machine (Support Vector Machine, SVM) is used to distinguish between a foggy image and a fog-free image, complete defogging by using a dark channel model, and provide a driver with a visually enhanced image to enhance a visual effect. In addition, a vehicle speed is measured and a front distance is detected using millimeter wave radar, to determine whether to provide the driver with visual and voice warnings. This implements fog weather warnings (for example, including a heavy fog warning, a speeding warning, and a distance warning) using multi-sensor data.

Disadvantages of the solution 1: The solution focuses on multi-sensor fusion and relies on a plurality of types of hardware. To determine foggy weather by using a model of the support vector machine, foggy and fog-free images need to be captured in advance. Image data uses infrared images and requires installation of additional specific apparatuses. A hardware structure of the entire system is complex, which is unfavorable for practical production and use.

Solution 2: An image of a target place is obtained as an input, a dark channel value of each pixel in the image is calculated, to extract a dark channel image. A quantity of dark channel pixels whose pixel values are less than a preset dark channel threshold is determined, to determine a fog degree value of the image based on the quantity of pixels. Fog status information of the image is determined based on a preset correspondence between a fog degree value and fog status information. That is, the fog status information of the target place is determined.

Disadvantages of the second solution: A fog status is determined by comparing a dark channel model with a preset value, and other features in the fog status of the image are not considered. Although image gradient information is considered in the implementation process, this solution may fail in a single background scenario, such as a field or a country.

In conclusion, in the foregoing two solutions, fog feature information cannot be efficiently and accurately identified by using an existing general vehicle hardware architecture, and therefore, related warnings or control cannot be accurately sent to a driver or an automated driving system. Therefore, to resolve a problem that a current fog detection technology does not meet an actual service requirement, a technical problem to be actually resolved in this application includes the following: Fog feature information is efficiently and accurately identified based on an existing vehicle hardware architecture. Therefore, a warning or a control instruction to turn on fog lights is accurately sent to the driver or the automated driving system, to ensure driving safety.

For ease of understanding the embodiments of the present invention, the following uses as an example scenario of a fog light automatic prompting system in which a fog light automatic prompting method in this application is used. The following three scenarios may be included.

Scenario 1: When a vehicle is running in foggy weather, a driver or an automated driving system is automatically prompted to turn on fog lights.

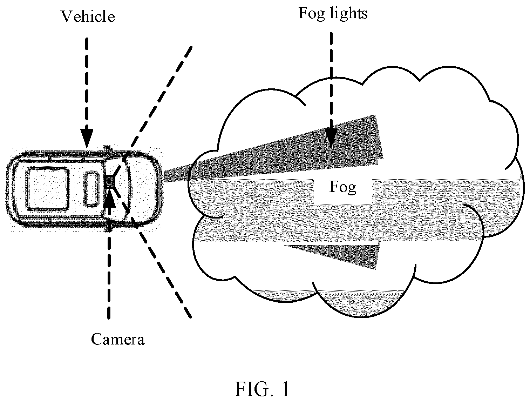

FIG. 1 is a schematic diagram of an application scenario of automatically prompting to turn on fog lights of a vehicle according to an embodiment of the present invention. The application scenario includes a vehicle (a private vehicle is used as an example in FIG. 1), and the vehicle includes a related camera module and a computer system (for example, including a processor, a controller, or a coordinator). The camera module and the computer system may transmit data through an in-vehicle bus system or wireless communication such as Bluetooth, Wi-Fi, or a mobile network. The camera module may capture an image or video in a running environment of the vehicle in real time, and then transmit the captured image or video to the computer system through the wired or wireless communication. The computer system analyzes, based on the obtained image or video, fog feature information in the running environment of the vehicle according to the fog feature identification method in this application, and makes, based on the fog feature information, a decision about whether to prompt a driver to turn on a fog light or execute related control. Further, the computer system may further obtain map information and weather information provided in related applications (for example, a map application and a weather application), to further determine whether there is fog in the current environment.

For example, when the vehicle runs in heavy fog, the computer system determines that density of fog in a current running environment of the vehicle is relatively high, and an in-vehicle system inside the vehicle may make a voice prompt: "Currently, visibility is predicted to be only 50 meters in heavy haze. It is advised to immediately turn on fog lights, low beam lights, side marker lights, front and rear position lights, and hazard lights, and the vehicle speed shall not exceed 20 kilometers per hour. Leave the highway as soon as possible from the nearest intersection". Alternatively, the computer system determines that the density of fog in the current running environment of the vehicle is relatively low, and the computer system may only prompt a driver to drive slowly, and keep a distance of more than 200 meters from a vehicle ahead in a same lane, to ensure that the driver correctly uses the fog lights in foggy weather, and improve driving safety. It may be understood that, if the vehicle is an autonomous vehicle, the computer system may directly control, based on an identification result, to turn on the fog lights, without prompting the driver to perform a related operation. As described above, the camera module may be an original camera module having the foregoing image or video capture function and wired/wireless communications function in the vehicle, or may be an additionally installed dashboard camera or the like. The computer system may be an original in-vehicle computing system having the foregoing data processing capability and control device capability in the vehicle, or may be an additionally installed in-vehicle computing system or the like. This is not specifically limited in this application.

Scenario 2: In a public place in foggy weather, a manager is automatically prompted to turn on fog lights.

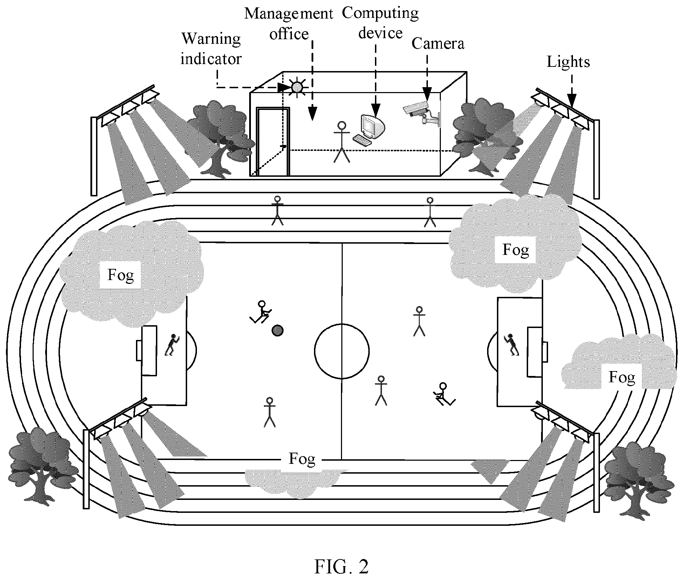

FIG. 2 is a schematic diagram of an application scenario of automatically prompting to turn on fog lights in a public place according to an embodiment of the present invention. The application scenario includes an open public place (a playground is used as an example in FIG. 2), a camera module (a surveillance camera module installed outside a wall of a management office is used as an example in FIG. 2), a computer system (a desktop computer in the management office is used as an example in FIG. 2), and lights around the public place. The camera module and the computer system may transmit data through wireless communication such as Bluetooth, Wi-Fi, or a mobile network, or wired communication such as a data cable. The camera module may capture an image or video of a football field in real time, and then transmit the captured image or video to the computer system through the wired or wireless communication. The computer system analyzes, based on the obtained image or video, fog feature information of a football field environment according to the fog feature identification method in this application, and makes, based on the fog feature information, a decision about whether to prompt the administrator to turn on fog lights or execute related control. Further, the computer system may further obtain map information and weather information provided in related applications (for example, a map application and a weather application), to further determine whether there is fog in the current environment.

For example, in heavy fog, when the computer system obtains, through analysis, that current density of fog in the football field is relatively high, a prompt window of "fog warning, turn on the fog lights" may be directly popped up in the computer system, or prompt information for turning on the fog lights may be sent to a place manager's mobile phone, or an alarm bell in the management office may be controlled to prompt the manager to turn on the fog lights. It may be understood that, in the scenario 2, in this application, a prompt of turning on the fog lights may be provided to the manager. If the manager observes that no one is in the public place currently, the manager may ignore the prompt, or choose to turn off the prompt, to save electric energy resources. It should be noted that turning on the fog light may be turning on one or more groups of fog lights pre-installed in the lights. If no additional fog light is installed in the lights, turning on the fog light may also be turning on some lights, or turning on all lights.

Scenario 3: Street lights or fog lights are automatically turned on on a foggy road.

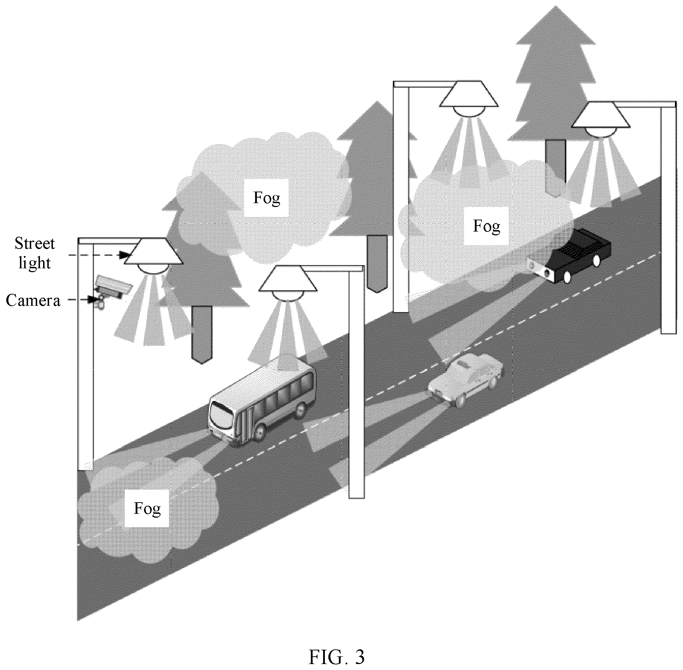

FIG. 3 is a schematic diagram of an application scenario of automatically turning on street lights in foggy weather according to an embodiment of the present invention. The application scenario includes a road, street lights on both sides of the road, a camera module installed on a street light, and a computer system installed on a street light. In a large area of fog in a row, as shown in FIG. 3, the camera module and the computer system may be installed on one street light selected from the plurality of street lights. For example, one camera module is installed for every 10 street lights. Alternatively, the camera module and the computer system may be installed on a street light in a traffic-intensive area such as an intersection. The camera module and the computer system may transmit data through wireless communication such as Bluetooth, Wi-Fi, or a mobile network, or wired communication such as a data cable. The computer system may control turn-on and turn-off of one group of street lights (for example, every 10 street lights are one group). The camera module may capture an image or video of a road environment in real time, and then transmit the captured image or video to the computer system through the wired or wireless communication. The computer system analyzes, based on the obtained image or video, fog feature information of the road environment according to the fog feature identification method in this application, and makes, based on the fog feature information, a decision about whether to control to turn on fog lights. Further, the computer system may further obtain map information and weather information provided in related applications (for example, a map application and a weather application), to further determine whether there is fog in the current environment. For example, when determining that the road environment is foggy currently, the computer system may control to turn on a corresponding group of street lights (for example, 10 street lights). It may be understood that, because road conditions change with time, regardless of whether there is a vehicle or a pedestrian on the road currently, street lights should be turned on in a timely manner, to ensure traffic safety in a timely manner. Optionally, the prompt information for turning on a street light may also be sent to a related responsible officer of the road.

It may be understood that the application scenarios and system architectures in FIG. 1, FIG. 2, and FIG. 3 are merely several example implementations in the embodiments of the present invention, and the application scenarios in the embodiments of the present invention include but are not limited to the foregoing application scenarios and system architectures. The fog feature identification method in this application may be further used in, for example, scenarios of automatically prompting to turn on lights on an open-air parking lot in foggy weather, and automatically prompting a pedestrian to turn on a flashlight on a mobile phone in foggy weather. Other scenarios and examples are not described in detail.

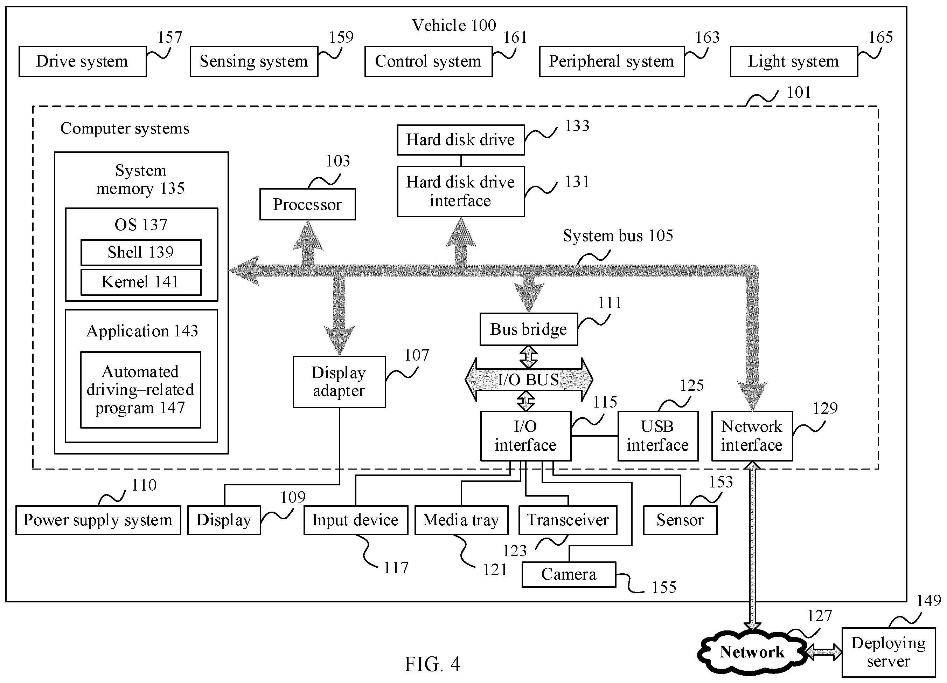

FIG. 4 is a functional block diagram inside a vehicle according to an embodiment of the present invention. Optionally, in an embodiment, a vehicle 100 may be configured in a fully or partially automated driving mode. For example, the vehicle 100 may control the vehicle 100 in an automated driving mode, may determine current statuses of the vehicle and an environment of the vehicle through a manual operation, determine possible behavior of at least one another vehicle in the ambient environment, determine a confidence level corresponding to a possibility that the another vehicle performs the possible behavior, and control the vehicle 100 based on determined information. When the vehicle 100 is in the automated driving mode, the vehicle 100 may be set to operate without interaction with a person.

A computer system 101 includes a processor 103, and the processor 103 is coupled to a system bus 105. The processor 103 may be one or more processors, and each processor may include one or more processor cores. A video adapter (video adapter) 107 may drive a display 109, and the display 109 is coupled to the system bus 105. The system bus 105 is coupled to an input/output (I/O) bus 113 through a bus bridge 111. An I/O interface 115 is coupled to the I/O bus. The I/O interface 115 communicates with a plurality of I/O devices, for example, an input device 117 (such as a keyboard, a mouse, and a touchscreen), a media tray (media tray) 121 (such as a CD-ROM and a multimedia interface), a transceiver 123 (which may transmit and/or receive a radio communication signal), a camera 155 (which may capture static and dynamic digital video images (including a target image in this application) and transmit the related image to the processor 103 for subsequent fog feature identification-related processing), and the external USB interface 125. Optionally, an interface connected to the I/O interface 115 may be a USB interface.

The processor 103 may be any conventional processor, including a reduced instruction set computing ("RISC") processor, a complex instruction set computing ("CISC") processor, or a combination thereof. Optionally, the processor may be a dedicated apparatus such as an application-specific integrated circuit ("ASIC"). Optionally, the processor 103 may be a neural network processor, an image processor, a combination of the neural network processor and the foregoing conventional processor, a combination of the image processor and the foregoing conventional processor, or a combination of the neural network processor, the image processor, and the foregoing conventional processor. This is not specifically limited in this application. The processor 103 may be configured to independently perform or interact with another function module in the vehicle 100 to perform any fog feature identification method in this application. For details, refer to related descriptions in subsequent method embodiments. Details are not described herein.

Optionally, in various embodiments described herein, the computer system 101 may be located away from the autonomous vehicle and may communicate wirelessly with the autonomous vehicle 100. In another aspect, some of processes described herein are performed on a processor disposed in the autonomous vehicle, and others are performed by a remote processor, including taking an action required to perform a single manipulation.

The computer system 101 may communicate with a deploying server 149 through a network interface 129. The network interface 129 is a hardware network interface, such as a network adapter. A network 127 may be an external network, such as the Internet; or may be an internal network, such as the Ethernet or a virtual private network (VPN). Optionally, the network 127 may also be a wireless network, such as a Wi-Fi network or a cellular network.

A hard disk drive interface is coupled to the system bus 105. The hardware drive interface is connected to a hard disk drive. A system memory 135 is coupled to the system bus 105. Data running in the system memory 135 may include an operating system 137 and an application 143 of the computer 101.

The operating system includes a shell 139 and a kernel (kernel) 141. The shell 139 is an interface between a user and the kernel (kernel) of the operating system. The shell is an outermost layer of the operating system. The shell manages interaction between the user and the operating system: waiting for an input from the user, interpreting the input from the user to the operating system, and processing various output results of the operating system.

The kernel 141 includes those parts of the operating system that are used for managing memories, files, peripherals, and system resources. The kernel directly interacts with hardware. The kernel of the operating system usually runs processes and provides interprocess communication, CPU time slice management, interruption, memory management, I/O management, and the like.

The application 143 includes a related program 147 controlling automated driving of a vehicle, for example, a program managing interaction between an autonomous vehicle and an obstacle on a road, a program controlling a route or a speed of the autonomous vehicle, or a program controlling interaction between the autonomous vehicle and another autonomous vehicle on the road. The application 143 also exists on a system of the deploying server 149. In an embodiment, when the program 147 needs to be executed, the computer system 101 may download the application 143 from the deploying server 149.

A sensor 153 is associated with the computer system 101. The sensor 153 is configured to detect an environment of the computer system 101. For example, the sensor 153 may detect an animal, a vehicle, an obstacle, a pedestrian crosswalk, and the like. Further, the sensor may detect an environment around the foregoing object such as the animal, the vehicle, the obstacle, and the pedestrian crosswalk, for example, an environment around the animal, such as another animal appearing around the animal, a weather condition, and brightness of the environment. Optionally, if the computer system 101 is located on the autonomous vehicle, the sensor may be a camera, an infrared sensor, a chemical detector, a microphone, or the like.

It may be understood that the vehicle 100 may also include a power supply 110 (which may provide power to various components of the vehicle 100), a drive system 157 (for example, an engine, a transmission device, an energy source, and wheels), a sensor system 159 (for example, a Global Positioning System, an inertial measurement unit, radar, a laser rangefinder, and a camera), a control system 161 (for example, a steering system, a throttle, a brake unit, a computer vision system, a route control system, and a roadblock avoidance system), a light system (for example, fog lights, low beam lights, high beam lights, side marker lights, and front and rear position lights), a peripheral device 163 (for example, a wireless communications system, a vehicle-mounted computer, a microphone, and a speaker). The computer system 101 may control functions of the vehicle 100 based on inputs received from various subsystems (for example, the drive system 157, the sensor system 159, and the control system 161) and from the input device 117.

For example, the computer system 101 may use an input from the control system 161 to control the steering system to avoid an obstacle detected by the sensor system 159 and the roadblock avoidance system. In some embodiments, the computer system 101 may operate to provide control on the vehicle 100 and the subsystems of the vehicle 100 in many aspects. For example, in this application, after determining fog feature information in a current running environment of the vehicle 100, the computer system 101 may control to turn on the fog lights in the vehicle light system 163, or perform a prompt by using another system, such as flashing an in-vehicle indicator, text prompting by the display 109, and sound warning by the speaker in the peripheral system 163.

The vehicle 100 may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in the embodiments of the present invention.

With reference to the foregoing application scenario, the system architecture, the vehicle structure, and the embodiment of the fog feature identification method provided in this application, the following specifically analyzes and resolves the technical problem proposed in this application.

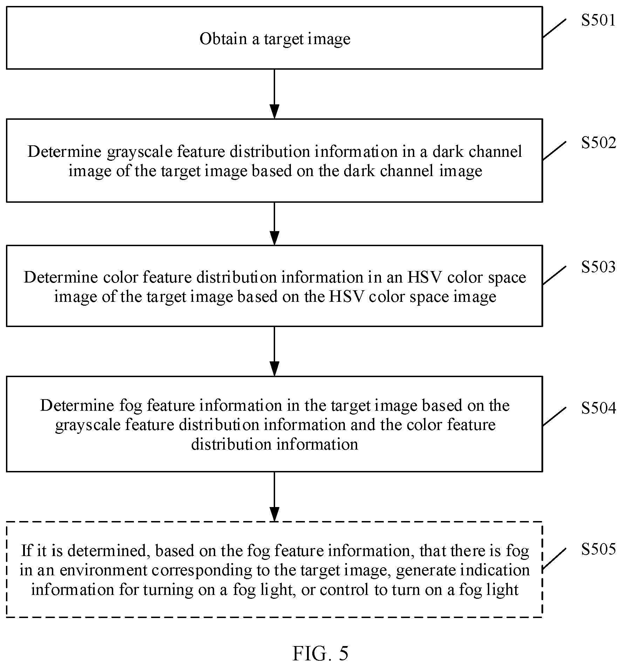

FIG. 5 is a schematic flowchart of a fog feature identification method according to an embodiment of the present invention. The method may be used in the application scenario and the system architecture in FIG. 1, FIG. 2, or FIG. 3, and may be specifically used in the vehicle 100 in FIG. 4. With reference to FIG. 5, an example in which the execution body is the computer system 101 inside the vehicle 100 in FIG. 4 is used for description below. The method may include steps S501 to S504, and optionally may further include step S505.

Step S501: Obtain a target image.

Specifically, the computer system 101 inside the vehicle 100 obtains images or a video of an external environment captured by the camera 155 (or referred to as a camera module, a camera group, or the like) of the vehicle 100, and obtains the target image from the images or video. Optionally, the target image in this embodiment of the present invention may be an image corresponding to a to-be-detected area that meets a preset condition in images or video frames of a current running environment that are captured by the camera 155. For example, the preset condition is that the to-be-detected area includes one or more of a sky line, a lane line blanking point area, and trees or buildings on both sides of a road.

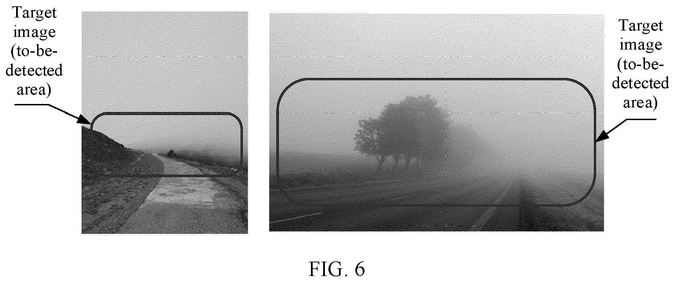

For example, FIG. 6 is a schematic diagram of determining the target image based on the to-be-detected area according to an embodiment of the present invention. When the vehicle runs on a highway, images or a video in a running environment of the vehicle is captured by using an external dashboard camera of the vehicle, a built-in camera of the vehicle, or the like. Then, the target image is obtained based on the captured images or video. The target image may be an image that is in the captured images or video frames and that includes one or more of a sky line, a lane line blanking point area, or trees or buildings on both sides of a road. In this embodiment of the present invention, the to-be-detected area in the captured images that is at a specified distance from a human eye and includes a clear dividing line is used as the target image in this embodiment of the present invention, to facilitate subsequent fog feature identification, further improve identification efficiency and identification accuracy of a fog feature in the target image. Such an image has a clear edge, the edge is good fog feature measurement information. There is usually no clear edge in a foggy scenario. In a fog-free scenario, an edge is clear, which affects distribution of grayscale or color features.

Step S502: Determine grayscale feature distribution information in a dark channel image of the target image based on the dark channel image.

Specifically, because an image has no color feature in a dark channel mode, the image is mainly described from a grayscale feature. A grayscale means that levels are divided between white and black according to a logarithmic relationship, and generally range from 0 to 255. The white is 255, and the black is 0. The computer system 101 generates the dark channel image of the target image based on a dark channel feature extraction algorithm (which may also be understood as performing dark channel feature extraction on the target image). Based on the prior dark channel feature, in most non-sky local areas, some pixels always have very low values in least one color channel. In real life, there are three main factors that cause low channel values of dark original colors: (a) shadows of glass windows in vehicles, buildings, and cities, or projection of natural landscapes such as leaves, trees, and rocks; (b) pixels of some of RGB channels of images of brightly colored objects or surfaces have low values (for example, green grasses/trees/plants, red or yellow flowers/leaves, or blue water surfaces); (c) darker objects or surfaces, for example gray trunks and stones. In short, natural scenes are full of shadows or colors, and dark original colors of these scenes are always very dark. Through feature analysis of a large quantity of dark channel images of foggy images and fog-free images, it can be found that a dark channel image corresponding to a foggy image is gray (pixels are close to 255), but a dark channel image corresponding to a fog-free image is mostly black (pixels are close to 0). In other words, compared with the dark channel image of the fog-free image, the dark channel image of the foggy image has a higher probability that overall pixel values of the dark channel image are large. That is, if there is fog, it is considered that pixels with relatively large pixel values occupy a majority of the pixels. Therefore, in this embodiment of the present invention, the grayscale feature distribution information in the dark channel image of the target image may reflect a possibility that there is fog in an environment corresponding to the target image, density of fog in a foggy environment, and the like to some extent.

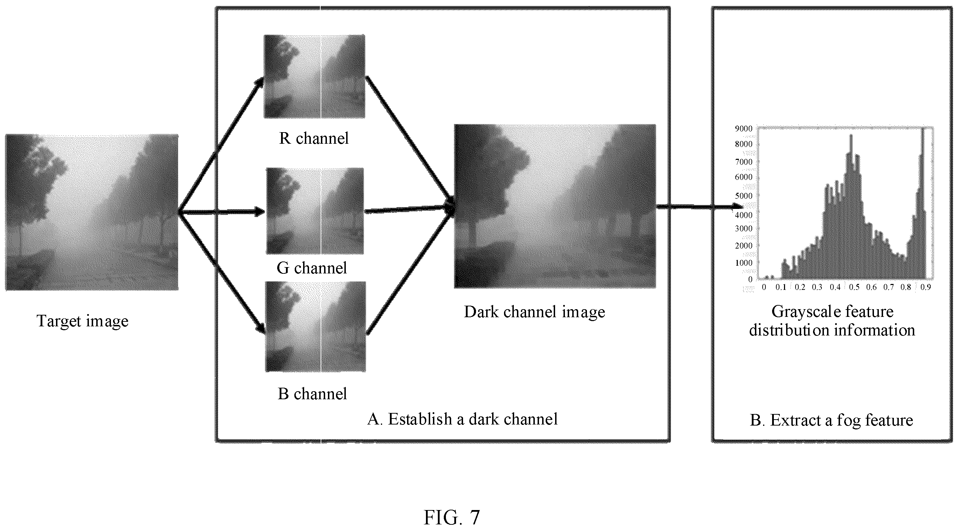

In a possible implementation, FIG. 7 is a schematic diagram of generating the dark channel image of the target image according to an embodiment of the present invention. According to the prior theorem, the dark channel image of the target image may be specifically established by using the following steps: Calculate a smallest value of three channels (RGB channels) in a neighborhood M corresponding to each pixel x, to generate a dark channel image $J_{dark}$. A dark channel calculation model is shown in formula (1).

$$ J_{dark} = \min_{x \in M} \left( \min_{c \in \{r,\, g,\, b\}} I^c(x) \right) \quad (1) $$

$J_{dark}$ is the dark channel image, I is a photographed image, namely, the target image, c is each color channel of the image, {r, g, b} represents red, green, or blue, x represents a to-be-processed pixel, M is an M x M neighborhood centered on x, and M is an odd number greater than 0, for example, a 3 x 3 neighborhood. That is, the smallest value of each pixel in the RGB channels in the target image is found, and is stored in a grayscale image with a same size as the original target image, and then minimum value filtering is performed on the grayscale image. A filtering radius is determined by a size of a window (that is, the M x M neighborhood). Finally, the dark channel image of the target image is formed.

Step S503: Determine color feature distribution information in an HSV color space image of the target image based on the HSV color space image.

Specifically, in an HSV color space image mode, the target image is mainly described in different dimensions of a color feature, for example, hue, saturation, and value. The computer system 101 generates the HSV color space image of the target image based on a dark channel feature extraction algorithm and a hue saturation HSV feature extraction algorithm (which may also be understood as performing HSV color space feature extraction on the target image). An HSV color model defines colors based on human's intuitive perception of colors, shade, and hue, and this color system is closer to people's experience and perception of colors than the RGB system. An HSV color space may be described by a cone space model. The model of the HSV color space corresponds to a cone subset in the cylindrical coordinate system, and the top surface of the cone corresponds to V=1. The model of the HSV color space contains three surfaces (R=1, G=1, and B=1) in the RGB model, which represent bright colors. Hue H is given by a rotation angle around a V axis, red corresponds to 0°, green corresponds to 120°, and blue corresponds to 240°. In the HSV color model, each color differs by 180° from its complementary color. Saturation S ranges from 0 to 1, and therefore a radius of the top surface of the cone is 1. At the vertex (or origin) of the cone, V = 0, H and S are not defined, and the vertex represents black. At the center of the top surface of the cone, S = 0, V = 1, H is not defined, and the center represents white. This point to the origin represent grays with fading brightness, namely, grays with different grayscales. For these points, S = 0, and the value of H is not defined. It can be said that the V axis in the HSV model corresponds to a main diagonal in the RGB color space. For colors on the circumference of the top surface of the cone, V = 1, S = 1, and the colors are solid colors. It may be understood that, after the target image is converted into the HSV color space image, pixel values of pixels of the converted HSV color space image in each channel still needs to be finally converted into pixel values ranging from 0 to 255, to facilitate subsequent unified calculation.

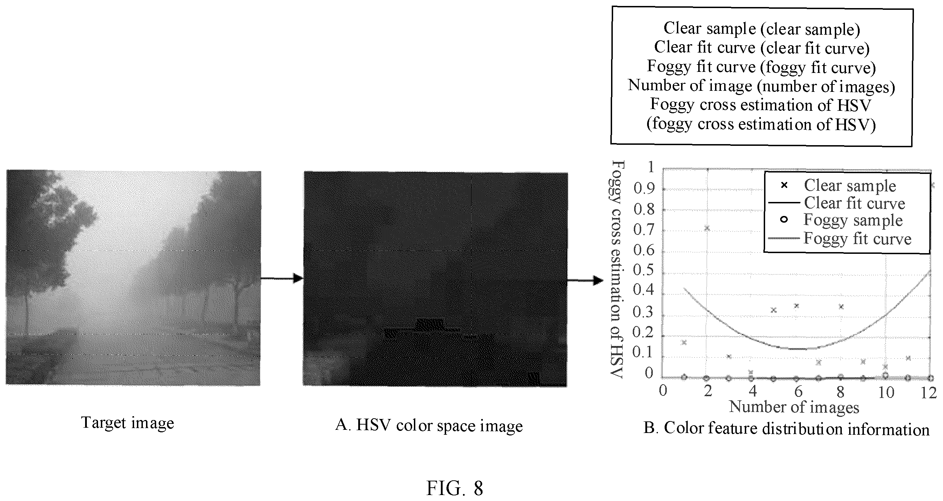

FIG. 8 is a schematic diagram of generating the HSV color space image of the target image according to an embodiment of the present invention. HSV color space feature extraction is first performed on the target image, and then color feature distribution information is analyzed, to identify a fog feature. It may be understood that the HSV color space image in the figure is actually colorful.

In this embodiment of the present invention, when there is fog, a color change in the HSV color space image of the target image is usually relatively small. That is, pixel values in the HSV color space image usually slight vary. Correspondingly, a standard deviation or variance of pixel values of pixels in the HSV color space image is relatively small. However, when there is no fog, a color change in the HSV color space image of the target image is usually relatively large. That is, pixel values in the HSV color space image usually greatly vary. Correspondingly, a standard deviation or variance of pixel values of pixels in the HSV color space image is relatively large. Therefore, in this embodiment of the present invention, the color feature distribution information in the HSV color space image of the target image may reflect a possibility that there is fog in the environment corresponding to the target image, density of fog in a foggy environment, and the like to some extent. Optionally, a variance or an average deviation may be obtained for pixel values of pixels of any one or more channels of an H channel, an S channel, and a V channel in the HSV color space image. This is not specifically limited in this embodiment of the present invention.

Step S504: Determine fog feature information in the target image based on the grayscale feature distribution information and the color feature distribution information.

Specifically, the computer system 101 determines the fog feature information in the target image with reference to the grayscale feature distribution information in the dark channel image of the target image and the color feature distribution information in the HSV color space image of the target image. The fog feature information may include whether there is fog in the current environment corresponding to the target image, density of fog in a foggy environment, and the like. Optionally, the fog in this application may include a similar phenomenon such as fog, haze, or dust. That is, whether there is fog is comprehensively determined based on feature distribution of pixel values of images in the two color models, and identification accuracy is greatly improved, to avoid a case in which in some special environments, a captured image causes an error when whether there is fog is determined by analyzing a feature in a single image mode, and accuracy may be reduced.

For example, when there is no clear boundary in the target image, or when the target image is a scene such as a field, a country, a blue sky, or a sea with a single background or a single color, the identification solution may fail if only the dark channel model is used to compare with a preset value for determining. These scene images often have similar features. Assuming that a scene is most the blue sky, that is, an entire image is basically a uniform color (for example, blue), color distribution in the dark channel image and the HSV space image is a straight line. That is, a distribution ratio of a color is 100%, and distribution ratios of other colors are 0%. When there is fog, a statistical feature of such images is that a distribution ratio of a color is 100%, and distribution ratios of other colors are 0%. Therefore, a relationship between pixels cannot be obtained through comparing. Therefore, the method fails.

It may be understood that this embodiment of the present invention may also be used to identify whether there is fog in an image, and perform a defog operation on the target image, so that the defog operation may be performed on a foggy image or the target image with a fog feature based on the identification result, to obtain a clear target image.

In this embodiment of the present invention, the fog feature information in the target image is determined based on both a grayscale feature of a dark channel and a color feature of the HSV color space image of the target image, to further determine whether there is fog in the environment corresponding to the target image. Feature information of a plurality of channels is fused, and accuracy of determining the fog feature information is improved. Specifically, when a foggy environment is compared with a fog-free environment, a quantity of pixels with small pixel values in a dark channel image of a foggy image is usually greater than that of a dark channel image of a fog-free image (for example, an overall color of the foggy image is lighter and an overall color of the fog-free image is darker), and a pixel value change of pixels in an HSV color space image of the foggy image is usually smaller than that of an HSV color space image of the fog-free image (for example, the foggy image has smaller fluctuation in the overall color, and the fog-free image has larger fluctuation in the overall color). Therefore, in this embodiment of the present invention, whether there is fog in the environment corresponding to the target image is not determined based on a single channel feature, but is comprehensively determined based on related features that are of the dark channel image and the HSV color space image and are distinct in a foggy situation and a fog-free situation. This implements accurate and efficient fog detection. In specific application scenarios, this embodiment of the present invention may be used to determine whether a photo needs to be defogged, whether a fog light needs to be turned on, whether a related emergency device needs to be turned on, and the like.

Step S505 (optional): If it is determined, based on the fog feature information, that there is fog in the environment corresponding to the target image, generate indication information for turning on a fog light, or control to turn on a fog light.

Specifically, this embodiment of the present invention is used in a specific vehicle running application scenario. When determining, through analysis, that there is fog in the environment corresponding to the target image, the computer system 101 generates indication information for turning on fog lights, or controls to turn on fog lights. That is, a driver may be prompted to determine whether to turn on the fog lights or the fog lights may be directly controlled to be turned on, to avoid a safety accident easily caused because the driver does not turn on the fog lights in foggy weather due to misjudgment. This improves driving intelligence and safety, and ensures safety of the driver's life and property. Optionally, the fog feature identification method in this application may also be used in an automated driving system or a semi-automated driving system. In this case, the computer system 101 may directly control to turn on the fog lights, or the fog lights may be turned on according to a preset rule.

Based on any one of the foregoing embodiments of the fog feature identification method, how to determine the grayscale feature distribution information in the dark channel image of the target image based on the dark channel image may specifically include the following implementations:

The computer system 101 determines pixel values of pixels in the dark channel image of the target image, and counts a ratio of a quantity of pixels corresponding to each pixel value to a total quantity of pixels in the dark channel image. In this embodiment of the present invention, when a foggy environment is compared with a fog-free environment, a quantity of pixels with small pixel values in a dark channel image of a foggy image is usually greater than that of a dark channel image of a fog-free image (for example, an overall color of the foggy image is lighter and an overall color of the fog-free image is darker). In other words, pixel values of pixels in the dark channel image of the foggy image are usually small, so that pixels with small pixel values occupy a majority of the pixels. Therefore, statistics information about the ratio of the quantity of pixels corresponding to each pixel value to the total quantity of pixels in the dark channel image of the target image may be used as an important criterion for determining whether there is fog in the environment corresponding to the target image.

Based on any one of the foregoing embodiments of the fog feature identification method, how to determine the color feature distribution information in the HSV color space image of the target image based on the HSV color space image may specifically include the following three implementations:

Manner 1: The computer system 101 determines a standard deviation of pixel values of pixels of at least one channel in the HSV color space image of the target image, and determines color distribution in the HSV color space image based on the standard deviation of the pixel values of the pixels of the at least one channel.

In this embodiment of the present invention, the HSV color space image of the target image includes a hue H channel, a saturation S channel, and a value V channel. A pixel value change of pixels in an HSV color space image of a foggy image is usually smaller than that of an HSV color space image of a fog-free image (for example, the foggy image has smaller fluctuation in an overall color, and the fog-free image has larger fluctuation in an overall color). In other words, the pixel value change of the pixels in the HSV color space image of the foggy image is usually small, causing a small variance or standard deviation of the pixel values. Therefore, the standard deviation of the pixel values of the pixels of the at least one channel in the HSV color space image of the target image may also be used as an important criterion for determining whether there is fog in the environment corresponding to the target image, for example, the separate S channel, the separate V channel, the separate H channel, a combination of the S channel and the V channel, or another combination.

Manner 2: The computer system 101 determines a standard deviation and an average value of pixel values of pixels of at least one channel in the HSV color space image of the target image, and determines color distribution in the HSV color space image based on the standard deviation and the average value of the pixel values of the pixels of the at least one channel.

In this embodiment of the present invention, a pixel value change of pixels in an HSV color space image of a foggy image is usually smaller than that of an HSV color space image of a fog-free image (for example, the foggy image has smaller fluctuation in an overall color, and the fog-free image has larger fluctuation in an overall color). In other words, a pixel value change of the pixels in the HSV color space image of the foggy image is usually small, causing a small variance or standard deviation of the pixel values. Further, a ratio of the standard deviation to the average value enlarges change amplitude of the pixel values, so that the pixel value change can be determined more accurately. Therefore, the standard deviation and the average value of the pixel values of the pixels of the at least one channel in the HSV color space image of the target image may also be used as important criteria for determining whether there is fog in the environment corresponding to the target image.

Manner 3: The computer system 101 determines a standard deviation and an average value of pixel values of pixels of the S channel and a standard deviation and an average value of pixel values of pixels of the V channel of the HSV color space image of the target image; and determines color distribution in the HSV color space image based on the standard deviation and the average value of the pixel values of the pixels of the S channel and the standard deviation and the average value of the pixel values of the pixels of the V channel.

In this example of the present invention, a pixel value change of pixels in an HSV color space image of a foggy image is usually smaller than that of an HSV color space image of a fog-free image (for example, the foggy image has smaller fluctuation in an overall color, and the fog-free image has larger fluctuation in an overall color). In other words, the pixel value change of the pixels in the HSV color space image of the foggy image is usually small, causing a small variance or standard deviation of the pixel values. In addition, among the three channels (the H channel, the S channel, and the V channel) of the HSV color space image, the S channel and the V channel each are distinct in the foggy situation and the fog-free situation. Further, a ratio of the standard deviation to the average value enlarges change amplitude of the pixel values, so that the pixel value change can be determined more accurately. Therefore, the standard deviation and the average value of the pixel values of the pixels of the S channel and the standard deviation and the average value of the pixel values of the pixels of the V channel may also be used as important criteria for determining whether there is fog in the environment corresponding to the target image.

Based on the foregoing specific implementation of how to obtain the grayscale feature distribution information in the dark channel image and any specific implementations of how to obtain the color feature distribution information in the HSV color space image in the foregoing manners 1, 2, and 3, this embodiment of the present invention provides a specific solution of how to determine the fog feature information.

The determining fog feature information in the target image based on the grayscale feature distribution information and the color feature distribution information includes: calculating a first metric value of a fog feature in the dark channel image based on the ratio of the quantity of pixels corresponding to each pixel value to the total quantity of pixels in the dark channel image, and calculating a second metric value of a fog feature in the HSV color space image based on the color distribution in the HSV color space image; and determining the fog feature information in the target image based on the first metric value and the second metric value. Specifically, the computer system 101 may separately calculate the metric value of the fog feature in the dark channel image and the metric value of the fog feature in the HSV color space image with reference to some energy functions (Energy function). A metric value may be used to represent a strength degree of the fog feature in the image, and a relationship between the metric value and the strength degree may present different correspondences according to a specific formula of an energy function. For example, a larger metric value indicates a stronger fog feature in the target image, and a smaller metric value indicates a weaker fog feature in the target image. Alternatively, a larger metric value indicates a weaker fog feature in the target image, and a smaller metric value indicates a stronger fog feature in the target image. This is not specifically limited in this embodiment of the present invention.

In this embodiment of the present invention, the metric values of the fog features in the target image are separately calculated in different dimensions based on the ratio of the quantity of pixels corresponding to each pixel value in the dark channel image of the target image to the total quantity of pixels in the dark channel image and the color distribution in the HSV color space image determined in a plurality of manners. That is, density of fog in the image is determined in different dimensions. Finally, the fog feature information, for example, whether there is fog or density of fog in the corresponding environment, in the environment corresponding to the target image is comprehensively determined based on the metric values of the fog features in the two dimensions.

In an implementation of the present invention provides a specific calculation formula, to calculate the grayscale feature distribution information in the dark channel image. The determining grayscale feature distribution information in a dark channel image of the target image based on the dark channel image includes: counting, based on the dark channel image of the target image, a probability p($x_i$|d) that a pixel value of each pixel in the dark channel image falls within a pixel value interval to which the pixel value belongs, where

$$p(x_i|d) = \frac{\text{sum}(x_i)}{\text{sum}(x_{i \in d})},$$

$x_i$ is a pixel whose pixel value is i in the dark channel image, sum ($x_i$) is a total quantity of pixels whose pixel value is i in the dark channel image, $x_{i \in d}$ is a pixel whose pixel value falls within a corresponding pixel value interval d in the dark channel image, sum($x_{i \in d}$) is a total quantity of pixels whose pixel values fall within a pixel value interval to which the pixel value belongs in the dark channel image, and d includes a pixel value interval [0, N] and a pixel value interval (N, 255), where N is a preset pixel value threshold, 0 < N < 255, 0 ≤ i ≤ 255, and both N and i are integers.

In the foregoing calculation formula, p($x_i$|d) is a probability that an event $x_i$ occurs on the premise that the event d has occurred, and $p(x_i|d) = \frac{\text{sum}(x_i)}{\text{sum}(x_{i \in d})}$. That is, p($x_i$|d) represents a ratio of the quantity sum ($x_i$) of pixels whose pixel values are i in the dark channel image of the target image to the total quantity sum($x_{i \in d}$) of pixels whose pixel values fall within the corresponding pixel value interval d in the dark channel image of the target image, where d includes the pixel value interval [0, N] and the pixel value interval (N, 255]. That is, the pixel value interval is divided into [0, N] and the pixel value interval (N, 255]. Assuming that N is equal to 100, the pixel value intervals included in d are [0, 100] and (100, 255]. Assuming that i = 70, sum($x_{i \in d}$) indicates a total quantity of pixels whose pixel values fall within the pixel value interval [0, 100] to which the pixel value 70 belongs in the dark channel image of the target image, that is, a total quantity of pixels whose pixel values fall within the pixel value range [0, 100] in all the pixels in the dark channel image.

For example, the total quantity of pixels in the dark channel image is 2000, the quantity of pixels whose pixel values fall within the pixel value interval [0, 100] is 800, and a quantity of pixels whose pixel values fall within the pixel value interval (100, 255] is 1200. When the quantity of pixels whose pixel values are i = 70 is 20,

$p(x_i|d) = \frac{\text{sum}(x_i)}{\text{sum}(x_{i \in d})} = 20/800 = 0.025$. When a quantity of pixels whose pixel values are i = 200 is 300,

$p(x_i|d) = \frac{\text{sum}(x_i)}{\text{sum}(x_{i \in d})} = 600/1200 = 0.5$, and so on. Probabilities p($x_i$|d) corresponding to pixels whose pixel values are i in the dark channel image may be counted, to finally determine, based on all the probabilities, whether there is fog in the environment corresponding to the target image.

In this embodiment of the present invention, a ratio of a quantity of pixels corresponding to each pixel value in two pixel value intervals that use a preset pixel value threshold as a boundary point to a corresponding total quantity of pixels in each pixel value interval to which the pixel value belongs is counted. In addition, the ratio is determined as the grayscale feature distribution information in the dark channel image of the target image, and may be finally used as an important criterion for determining whether there is fog in the environment corresponding to the target image.

In an implementation of the present invention provides a specific calculation formula, to calculate the color feature distribution information in the HSV color space image. The determining color feature distribution information in an HSV color space image of the target image based on the HSV color space image includes:

calculating a saturation coefficient of variation $Q_s = \frac{\sigma(HSV_s)}{\mu(HSV_s)}$ and a value coefficient of variation $Q_v = \frac{\sigma(HSV_v)}{\mu(HSV_v)}$ of the HSV color space image of the target image based on the HSV color space image, where

$\sigma(HSV_s)$ is a standard deviation of pixel values of pixels of an S channel in the HSV color space image, $\mu(HSV_s)$ is an average value of the pixel values of the pixels of the S channel in the HSV color space image, $\sigma(HSV_v)$ is a standard deviation of pixel values of pixels of a V channel in the HSV color space image, and $\mu(HSV_v)$ is an average value of pixel values of pixels of the V channel in the HSV color space image. The standard deviation and the average value of the pixel values of the pixels of each of the S channel and the V channel in the HSV color space image are calculated, to separately obtain the coefficients of variation of the S channel and the V channel through calculation. That is, the pixel value change of the pixels in the HSV color space image is further quantified. The coefficients of variation are determined as the color feature distribution information in the HSV color space image of the target image, and may be finally used as important criteria for determining whether there is fog in the environment corresponding to the target image. For the calculation formula of the standard deviation/variance or the average value, refer to a specific calculation manner of the standard deviation/variance or the average value in the conventional technology. It should be noted that, when dispersion degrees of two groups of data need to be compared, if a difference between measurement scales of the two groups of data is too large or data dimensions are different, a comparison effect may be affected by directly using a standard deviation for comparison. In this case, impact of the measurement scale and the dimension should be eliminated. A coefficient of variation (Coefficient of Variation) is a ratio of a standard deviation of the original data to an average value of the original data, and the coefficient of variation has no dimension. Therefore, more accurate comparison can be performed.

In an implementation, a specific calculation formula is provided based on specific calculation formulas of the grayscale feature distribution information and the color feature distribution information, to calculate the fog feature information:

The determining fog feature information in the target image based on the grayscale feature distribution information and the color feature distribution information includes:

(1) Calculate a first metric $E_1$ of a fog feature in the dark channel image according to a formula $E_1 = -\Sigma_{x_i \in w} p(x_i|d) \ln p(x_i|d)$ based on the probability $p(x_i|d)$ that a pixel value of each pixel in the dark channel image falls within a pixel value interval to which the pixel value belongs.

Herein, w is all pixels in the dark channel image. Optionally, w may be some pixels in the dark channel image. This is not specifically limited in this embodiment of the present invention. That is, the first metric value of the fog feature in the dark channel image corresponding to the target image is calculated according to the energy calculation formula $E_1$ of the fog feature in the dark channel image provided in this application and based on the probability $p(x_i|d)$ that a pixel value of each pixel in the dark channel image of the target image falls within a pixel value interval to which the pixel value belongs. The foregoing formula $E_1$ for calculating a metric value of a fog feature uses an entropy function in this embodiment of the present invention. The entropy function is a type of energy measurement function, and is mainly a measurement means for statistics. Herein, when the entropy is used as the energy measurement function $E_1$, a probability distribution (that is, the probability $p(x_i|d)$ that a pixel value of each pixel in the dark channel image falls within a pixel value range to which the pixel value belongs) is mainly used. This facilitates calculation. It may be understood that the energy measurement function $E_1$ may also be appropriately transformed provided that the metric value of the fog feature in the dark channel image can be calculated based on the probability $p(x_i|d)$ that a pixel value of each pixel in the dark channel image falls within a pixel value interval to which the pixel value belongs. This is not specifically limited in the present invention

(2) Calculate a second metric value $E_2$ of a fog feature in the HSV color space image according to a formula $E_2 = e^{-\sqrt{Q_s^2 + Q_v^2}}$ based on the saturation coefficient of variation $Q_s = \frac{\sigma(HSV_s)}{\mu(HSV_s)}$ and the value

coefficient of variation $Q_v = \frac{\sigma(HSV_v)}{\mu(HSV_v)}$ of the HSV

color space image, where e is the natural constant. That is, the second metric value of the fog feature in the HSV color space image corresponding to the target image is calculated according to the calculation formula $E_2 = e^{-\sqrt{Q_s^2 + Q_v^2}}$ provided in the present invention and based on a ratio of a standard deviation to an average value of pixel values of pixels of the corresponding saturation S channel in the HSV color space image of the target image and a ratio of a standard deviation to an average value of pixel values of pixels of a value V channel in the HSV color space image.

It should be noted that, to calculate and compare the energy function, the energy function is usually combined with probability distribution. Because the energy function $E_1$ directly uses the counted pixel probability, the information entropy may be used as the energy function. However, the energy function $E_2$ in this embodiment of the present invention uses the saturation coefficient of variation and the value coefficient of variation as metrics. Therefore, it is assumed that distribution of the energy function $E_2$ conforms to normal distribution. A variant of an expression of the normal distribution is used, and a constant is omitted, to obtain the energy function $E_2$. Optionally, $E_2$ may also use an original form of the normal distribution. It may be understood that the foregoing energy measurement function $E_2$ may also be appropriately transformed provided that the metric value of the fog feature in the HSV color space image can be calculated based on the saturation coefficient of variation $Q_s = \frac{\sigma(HSV_s)}{\mu(HSV_s)}$ and the value

variation coefficient $Q_v = \frac{\sigma(HSV_v)}{\mu(HSV_v)}$ of the HSV color space image. This is not specifically limited in this embodiment of the present invention.

(3) Calculate a total metric value of the fog feature in the target image according to a formula $E = aE_1 + bE_2$, where a and b are weight factors of $E_1$ and $E_2$ respectively, $a + b = 1$, $a > 0$, and $b > 0$. Finally, the total metric value of the fog feature of the environment corresponding to the target image is calculated based on the first metric value of the fog feature in the dark channel image corresponding to the target image, the second metric value of the fog feature in the HSV color space image corresponding to the target image, and the preset weight coefficients a and b.

For example, a = 0.5 and b = 0.5. It may be understood that different values of a and b may be set according to different application scenarios or different requirements. This is not specifically limited in this embodiment of the present invention.

(4) If $E \leq \tau_0$, determine that there is fog in the environment corresponding to the target image, where $\tau_0$ is a preset energy threshold, and $0 \leq \tau_0 \leq 1$. To be specific, the metric values of the fog features presented in the dark channel image and the HSV color space image corresponding to the target image are comprehensively considered. When a sum is less than or equal to a preset metric value, it may be understood that the preset energy threshold $\tau_0$ may be updated based on different scenarios or requirements. In the foregoing formula in this embodiment of the present invention, a larger value of E indicates a smaller probability of fog (or lower density of fog), and a smaller value of E indicates a larger probability of fog (or higher density of fog). However, it may be understood that a relationship between a value of the total metric E and density of fog may present different correspondences based on a specific formula of the energy function. For example, different values may be set for a value of $E \leq \tau_0$. For example, if a negative sign is added to each of the formulas of $E_1$ and $E_2$, the formulas may also indicate that a larger value of E indicates a greater probability of fog (or higher density of fog), and a smaller value of E indicates a smaller probability of fog (or a weaker intensity of fog), which is related to the expression of the energy function.

In this embodiment of the present invention, the ratio of the quantity of pixels corresponding to each pixel value in the two pixel value intervals that use the preset pixel value threshold as a boundary point to the corresponding total quantity of pixels in each pixel value interval to which the pixel value belongs is counted, and the first metric value of the fog feature in the dark channel image of the target image is calculated based on the ratio. The standard deviation and the average value of the pixel values of the pixels of each of the S channel and the V channel in the HSV color space image are calculated, to separately obtain the coefficients of variation of the S channel and the V channel through calculation, and the second metric value of the fog feature in the HSV color space image of the target image is calculated based on the coefficients of variation. In other words, the metric values of the fog features in the target image are separately calculated in different dimensions, and density of fog in the image is determined in different dimensions. Finally, the fog feature information, for example, whether there is fog or density of fog in the corresponding environment, in the environment corresponding to the target image is comprehensively determined based on the metric values of the fog features in the two dimensions.

In a possible implementation, the preset energy threshold is determined or updated based on a geographic location and weather that are corresponding to the current environment, to improve determining accuracy and efficiency. The method further includes:

determining a fog probability coefficient $s_1$ of a geographic location of the environment corresponding to the target image and a fog probability coefficient $s_2$ of weather; and

determining $\tau_0$ according to a formula

$$\tau_0 = \tau_0 e^{-\sqrt{\alpha_1 s_1^2 + \alpha_2 s_2^2}}$$, where $\alpha_1$ and $\alpha_2$ are weight

factors of $s_1$ and $s_2$ respectively, and $\alpha_1 + \alpha_2 = 1$, $\alpha_1 > 0$, $\alpha_2 > 0$. For example, when the weight coefficient $\alpha_1$ of the geographic location is greater than the weight coefficient $\alpha_2$ of the weather, the geographic location factor has greater impact on the preset energy threshold than that of the weather on the preset energy threshold. When the weight coefficient $\alpha_1$ of the geographic location is smaller than the weight coefficient $\alpha_2$ of the weather, the geographic location factor has less impact on the preset energy threshold than that of the weather on the preset energy threshold. For a formula updating principle of $\tau_0$, refer to the principle of the calculation formula of the second metric $E_2$. Details are not described herein again. It may be understood that the formula for updating the preset energy threshold may also be appropriately changed. This is not specifically limited in this embodiment of the present invention.

In this embodiment of the present invention, the preset energy threshold $\tau_0$ may be determined or updated in real time based on impact of a geographic location and weather on whether there is fog in an environment, to improve determining accuracy. For example, a scenic spot is more prone to be foggy than an urban area, and a rainy day is more prone to be foggy than a cloudy day or a sunny day. Therefore, an energy threshold $\tau_0$ in a fog-prone geographic location or weather may be smaller than an energy threshold $\tau_0$ in a geographic location or weather in which fog is not prone to occur, to reduce a misjudgment rate. For example, a value of the fog coefficient $s_1$ of the geographic location is 1, 3, and 10, respectively representing a mountain area, a rural area, and an urban area, and a value of the fog coefficient $s_2$ of the weather is 1, 3, and 10, respectively representing a rainy day, a cloudy day, and a sunny day. A smaller value of $s_1$ indicates larger $\tau_0$, and a larger probability of fog in this state. Similarly, a principle of $s_2$ is the same as that of $s_1$, and details are not described herein again.

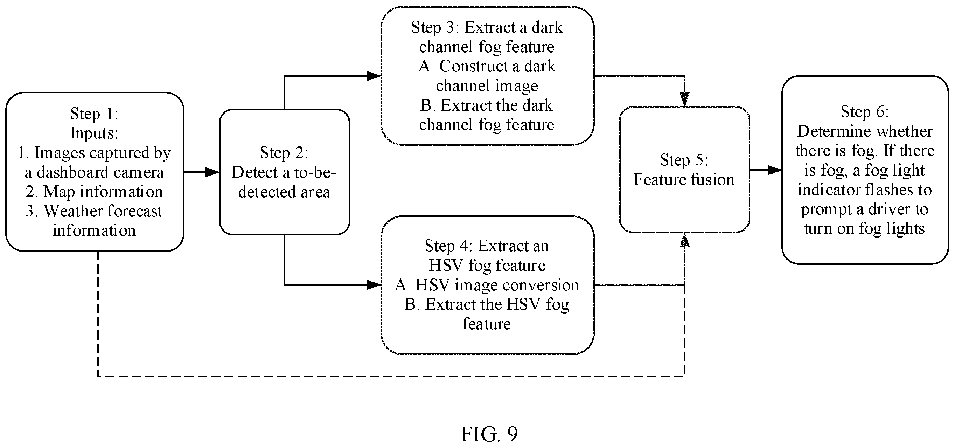

FIG. 9 is a flowchart of fog feature identification in a specific application scenario according to an embodiment of the present invention. When a vehicle is started, an image or a video in a current environment is loaded by using a camera, and current map information and weather information are obtained by using in-vehicle applications in the vehicle. Then, a to-be-detected area, namely, a target image, is extracted by using an in-vehicle computer system. A dark channel image is constructed for the to-be-detected area, and a dark channel fog feature is extracted. At the same time, the image is converted into an HSV color space image, and a fog feature is extracted in an HSV space. The dark channel fog feature and the HSV fog feature are fused, and map information and current weather information are used for correction to determine whether there is fog. If there is fog, an in-vehicle fog light indicator is flashed or sound warning is turned on to prompt a driver to turn on fog lights.

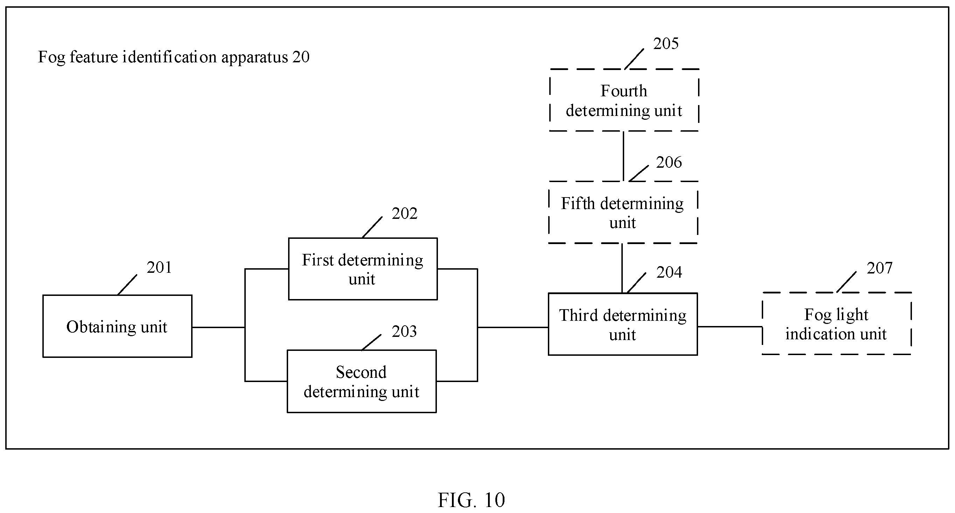

FIG. 10 is a schematic diagram of a structure a fog feature identification apparatus according to an embodiment of the present invention. The fog feature identification apparatus 20 may include an obtaining unit 201, a first determining unit 202, a second determining unit 203, and a third determining unit 204.

The obtaining unit 201 is configured to obtain a target image.

The first determining unit 202 is configured to determine grayscale feature distribution information in a dark channel image of the target image based on the dark channel image.

The second determining unit 203 is configured to determine color feature distribution information in an HSV color space image of the target image based on the HSV color space image.

The third determining unit 204 is configured to determine fog feature information in the target image based on the grayscale feature distribution information and the color feature distribution information.

In an implementation, the first determining unit 202 is specifically configured to:
determine pixel values of pixels in the dark channel image of the target image, and count a ratio of a quantity of pixels corresponding to each pixel value to a total quantity of pixels in the dark channel image.

In a possible implementation, the HSV color space image of the target image includes a hue H channel, a saturation S channel, and a value V channel. The second determining unit 203 is specifically configured to:

determine a standard deviation of pixel values of pixels of at least one channel in the HSV color space image of the target image; and
determine color distribution in the HSV color space image based on the standard deviation of the pixel values of the pixels of the at least one channel.

The HSV color space image of the target image includes a hue H channel, a saturation S channel, and a value V channel. The second determining unit 203 is specifically configured to:

determine a standard deviation and an average value of pixel values of pixels of at least one channel in the HSV color space image of the target image; and
determine color distribution in the HSV color space image based on the standard deviation and the average value of the pixel values of the pixels of the at least one channel.

In a possible implementation, the second determining unit 203 is specifically configured to:

determine a standard deviation and an average value of pixel values of pixels of an S channel, and a standard deviation and an average value of pixel values of pixels of a V channel of the HSV color space image of the target image; and
determine color distribution in the HSV color space image based on the standard deviation and the average value of the pixel values of the pixels of the S channel and the standard deviation and the average value of the pixel values of the pixels of the V channel.

In a possible implementation, the second determining unit 203 is specifically configured to:

calculate a first metric value of a fog feature in the dark channel image based on the ratio of the quantity of pixels corresponding to each pixel value to the total quantity of pixels in the dark channel image, and calculate a second metric value of a fog feature in the HSV color space image based on the color distribution in the HSV color space image; and
determine the fog feature information in the target image based on the first metric value and the second metric value.

In a possible implementation, the first determining unit 202 is specifically configured to:
count, based on the dark channel image of the target image, a probability $p(x_i|d)$ that a pixel value of each pixel in the dark channel image falls within a pixel value interval to which the pixel value belongs, where

$$p(x_i|d) = \frac{sum(x_i)}{sum(x_{i \in d})},$$

$x_i$ is a pixel whose pixel value is i in the dark channel image, sum $(x_i)$ is a total quantity of pixels whose pixel value is i in the dark channel image, $x_{i \in d}$ is a pixel whose pixel value falls within a corresponding pixel value interval d in the dark channel image, $sum(x_{i \in d})$ is a total quantity of pixels whose pixel values fall within a pixel value interval to which the pixel value belongs in the dark channel image, and d includes a pixel value interval [0, N] and a pixel value interval (N, 255], where N is a preset pixel value threshold, $0 < N < 255$, $0 \le i \le 255$, and both N and i are integers.

In a possible implementation, the second determining unit 203 is specifically configured to:

calculate a saturation coefficient of variation $Q_s = \frac{\sigma(HSV_s)}{\mu(HSV_s)}$ $Q_s$ and a value coefficient of variation $Q_v = \frac{\sigma(HSV_v)}{\mu(HSV_v)}$ of the HSV color space image of the target image based on the HSV color space image, where

$\sigma(HSV_s)$ is a standard deviation of pixel values of pixels of an S channel in the HSV color space image, $\mu(HSV_s)$ is an average value of the pixel values of the pixels of the S channel in the HSV color space image, $\sigma(HSV_v)$ is a standard deviation of pixel values of pixels of a V channel in the HSV color space image, and $\mu(HSV_v)$ is an average value of pixel values of pixels of the V channel in the HSV color space image.

In a possible implementation, the third determining unit 204 is specifically configured to:

calculate a first metric $E_1$ of a fog feature in the dark channel image according to a formula $E_1 = - \sum_{x_i \in w} p(x_i|d)$ *In* $p(x_i|d)$ based on the probability $p(x_i|d)$ that a pixel value of each pixel in the dark channel image falls within a pixel value interval to which the pixel value belongs, where w is all pixels in the dark channel image;

calculate a second metric value $E_2$ of a fog feature in the HSV color space image according to a formula $E_2 = e^{-\sqrt{Q_s^2 + Q_v^2}}$ based on the saturation coefficient of variation $Q_s = \frac{\sigma(HSV_s)}{\mu(HSV_s)}$ and the value coefficient of variation $Q_v = \frac{\sigma(HSV_v)}{\mu(HSV_v)}$ of the HSV color space image, where e is the natural constant;

calculate a total metric value of the fog feature in the target image according to a formula $E = aE_1 + bE_2$, where a and b are weight factors of $E_1$ and $E_2$ respectively, a + b = 1, a > 0, and b > 0; and

if $E \leq \tau_0$, determine that there is fog in an environment corresponding to the target image, where $\tau_0$ is a preset energy threshold, and $0 \leq \tau_0 \leq 1$.

In a possible implementation, the apparatus 20 further includes:

a fourth determining unit 205, configured to determine a fog probability coefficient $s_1$ of a geographic location of the environment corresponding to the target image and a fog probability coefficient $s_2$ of weather; and

a fifth determining unit 206, configured to determine

$\tau_0$ according to a formula $\tau_0 = \tau_0 e^{-\sqrt{\alpha_1 s_1^2 + \alpha_2 s_2^2}}$, where $\alpha_1$ and $\alpha_2$ are weight factors of $s_1$ and $s_2$ respectively, and $\alpha_1 + \alpha_2 = 1$, $\alpha_1 > 0$, $\alpha_2 > 0$.

In a possible implementation, the apparatus 20 further includes:

a fog light indication unit 207, configured to: if it is determined, based on the fog feature information, that there is fog in the environment corresponding to the target image, generate indication information for turning on a fog light, or control to turn on a fog light.

In a possible implementation, the target image is an image corresponding to a to-be-detected area in captured images, and the to-be-detected area includes one or more of a skyline, a lane line blanking point area, or trees or buildings on both sides of a road.

It should be noted that, for the function of the fog feature identification apparatus 20 described in this embodiment of the present invention, refer to related descriptions of the related method embodiments described in FIG. 1 to FIG. 9. Details are not described herein again.

Each unit in FIG. 10 may be implemented by software, hardware, or a combination thereof. A unit implemented by hardware may include a logic circuit, an algorithm circuit, an analog circuit, or the like. A unit implemented by software may include a program instruction, is considered as a software product stored in a memory, and may be run by a processor to implement a related function. For details, refer to the foregoing descriptions.

In this embodiment of the present invention, the fog feature information in the target image is determined based on both a grayscale feature of a dark channel and a color feature of the HSV color space image of the target image, to further determine whether there is fog in the environment corresponding to the target image. Feature information of a plurality of channels is fused, and accuracy of determining the fog feature information is improved. Specifically, when a foggy environment is compared with a fog-free environment, a quantity of pixels with small pixel values in a dark channel image of a foggy image is usually greater than that of a dark channel image of a fog-free image (for example, an overall color of the foggy image is lighter and an overall color of the fog-free image is darker), and a pixel value change of pixels in an HSV color space image of the foggy image is usually smaller than that of an HSV color space image of the fog-free image (for example, the foggy image has smaller fluctuation in the overall color, and the fog-free image has larger fluctuation in the overall color). Therefore, in this embodiment of the present invention, whether there is fog in the environment corresponding to the target image is not determined based on a single channel feature, but is comprehensively determined based on related features that are of the dark channel image and the HSV color space image and are distinct in a foggy situation and a fog-free situation. This implements accurate and efficient fog detection. In specific application scenarios, this embodiment of the present invention may be used to determine whether a photo needs to be defogged, whether a fog light needs to be turned on, whether a related emergency device needs to be turned on, and the like. Optionally, the fog in this application may include a similar phenomenon such as fog, haze, or dust.

The present invention further provides a computer-readable storage medium according to claim 11.

The embodiments of the present invention further provide a computer program according to claim 12, and the computer program includes instructions. When a computer executes the computer program, the computer may be enabled to perform some or all of the steps of any one of the fog feature identification methods.

In the foregoing embodiments, descriptions of the embodiments have respective focuses. For a part that is not described in detail in an embodiment, refer to related descriptions in other embodiments.

It should be noted that, for brief description, the foregoing method embodiments are represented as a series of actions. However, a person skilled in the art should appreciate that this application is not limited to the described sequence of the actions, because some steps may be performed in another sequence or simultaneously according to this application. It should be further appreciated by persons skilled in the art that the embodiments described in this specification all belong to embodiments, and the involved actions and modules are not necessarily required in this application.

In the several embodiments provided in this application, it should be understood that the disclosed apparatuses may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form or another form.

The foregoing units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, function units in the embodiments of this application may be integrated into one processing unit, or each of the units may exist alone physically, or two or more units are integrated into one unit. The integrated units may be implemented in a form of hardware, or may be implemented in a form of a software functional unit.

When the foregoing integrated unit is implemented in the form of the software function unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like, and may be specifically a processor in the computer device) to perform all or some of the steps of the methods described in the embodiments of this application. The foregoing storage medium may include: any medium that can store program code, such as a USB flash drive, a removable hard disk, a magnetic disk, an optical disc, a read-only memory (Read-Only Memory, ROM for short), or a random access memory (Random Access Memory, RAM for short).

The foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the invention as defined by the appended claims.

**Claims**

1. A computer-implemented fog feature identification method, comprising:

   obtaining (S501) a target image;
   determining (S502) grayscale feature distribution information in a dark channel image of the target image based on the dark channel image;
   determining (S503) color feature distribution information in an HSV color space image of the target image based on the HSV color space image; and
   determining (S504) fog feature information in the target image based on the grayscale feature distribution information and the color feature distribution information,
   wherein the determining (S502) grayscale feature distribution information in a dark channel image of the target image based on the dark channel image comprises:

      counting, based on the dark channel image of the target image, a probability $p(x_i|d)$ that a pixel value of each pixel in the dark channel image falls within a pixel value interval to which the pixel value belongs, wherein

$$p(x_i|d) = \frac{sum(x_i)}{sum(x_{i \in d})},$$

$x_i$ is a pixel whose pixel value is i in the dark channel image, sum $(x_i)$ is a total quantity of pixels whose pixel value is i in the dark channel image, $x_{i \in d}$ is a pixel whose pixel value falls within a corresponding pixel value interval d in the dark channel image, $sum(x_{i \in d})$ is a total quantity of pixels whose pixel values fall within a pixel value interval to which the pixel value belongs in the dark channel image, and d comprises a pixel value interval [0, N] and a pixel value interval (N, 255], wherein N is a preset pixel value threshold, $0 < N < 255$, $0 \leq i \leq 255$, and both N and i are integers;
wherein the determining (S503) color feature distribution information in an HSV color space image of the target image based on the HSV color space image comprises:

calculating a saturation coefficient of variation $Q_s = \frac{\sigma(HSV_s)}{\mu(HSV_s)}$ and a value

coefficient of variation $Q_v = \frac{\sigma(HSV_v)}{\mu(HSV_v)}$
of the HSV color space image of the target image based on the HSV color space image, wherein
$\sigma(HSV_s)$ is a standard deviation of pixel values of pixels of an S channel in the HSV color space image, $\mu(HSV_s)$ is an average value of the pixel values of the pixels of the S channel in the HSV color space image, $\sigma(HSV_v)$ is a standard deviation of pixel values of pixels of a V channel in the HSV color space image, and $\mu(HSV_v)$ is an average value of pixel values of pixels of the V channel in the HSV color space image; and
wherein the determining (S504) fog feature information in the target image based on the grayscale feature distribution information and the color feature distribution information comprises:

calculating a first metric $E_1$ of a fog feature in the dark channel image according to a formula $E_1 = - \Sigma_{x_i \in w}$ $p(x_i|d)$ *ln* $p(x_i|d)$ based on the probability $p(x_i|d)$ that a pixel value of each pixel in the dark channel image falls within a pixel value interval to which the pixel value belongs, wherein w is all pixels in the dark channel image;
calculating a second metric value $E_2$ of a fog feature in the HSV color space image according to a formula $E_2 = e^{-\sqrt{Q_s^2 + Q_v^2}}$ based on the saturation coefficient of variation

$Q_s = \frac{\sigma(HSV_s)}{\mu(HSV_s)}$ and the value coef-

ficient of variation $Q_v = \frac{\sigma(HSV_v)}{\mu(HSV_v)}$
of the HSV color space image, wherein e is the natural constant;
calculating a total metric value of the fog feature in the target image according to a formula $E = aE_1 + bE_2$, wherein a and b are weight factors of $E_1$ and $E_2$ respectively, a + b = 1, a > 0, and b > 0; and
if $E \leq \tau_0$, determining that there is fog in an environment corresponding to the target image, wherein $\tau_0$ is a preset energy threshold, and $0 \leq \tau_0 \leq 1$.

2. The method according to claim 1, wherein the determining (S502) grayscale feature distribution information in a dark channel image of the target image based on the dark channel image comprises:
determining pixel values of pixels in the dark channel image of the target image, and counting a ratio of a quantity of pixels corresponding to each pixel value to a total quantity of pixels in the dark channel image.

3. The method according to claim 2, wherein the HSV color space image of the target image comprises a hue H channel, a saturation S channel, and a value V channel, and the determining (S503) color feature distribution information in an HSV color space image of the target image based on the HSV color space image comprises:

determining a standard deviation of pixel values of pixels of at least one channel in the HSV color space image of the target image; and
determining color distribution in the HSV color space image based on the standard deviation of the pixel values of the pixels of the at least one channel.

4. The method according to claim 2, wherein the HSV color space image of the target image comprises a hue H channel, a saturation S channel, and a value V channel, and the determining (S503) color feature distribution information in an HSV color space image of the target image based on the HSV color space image comprises:

> determining a standard deviation and an average value of pixel values of pixels of at least one channel in the HSV color space image of the target image; and
> determining color distribution in the HSV color space image based on the standard deviation and the average value of the pixel values of the pixels of the at least one channel.

5. The method according to claim 2, wherein the determining (S503) color feature distribution information in an HSV color space image of the target image based on the HSV color space image comprises:

> determining a standard deviation and an average value of pixel values of pixels of an S channel, and a standard deviation and an average value of pixel values of pixels of a V channel of the HSV color space image of the target image; and
> determining color distribution in the HSV color space image based on the standard deviation and the average value of the pixel values of the pixels of the S channel and the standard deviation and the average value of the pixel values of the pixels of the V channel.

6. The method according to any one of claims 3 to 5, wherein the determining (S504) fog feature information in the target image based on the grayscale feature distribution information and the color feature distribution information comprises:

> calculating a first metric value of a fog feature in the dark channel image based on the ratio of the quantity of pixels corresponding to each pixel value to the total quantity of pixels in the dark channel image, and calculating a second metric value of a fog feature in the HSV color space image based on the color distribution in the HSV color space image; and
> determining the fog feature information in the target image based on the first metric value and the second metric value.

7. The method according to any one of claims 1 to 6, wherein the method further comprises:

> determining a fog probability coefficient $s_1$ of a geographic location of the environment corresponding to the target image and a fog probability coefficient $s_2$ of weather; and
> determining $\tau_0$ according to a formula

$$\tau_0 = \tau_0 e^{-\sqrt{\alpha_1 s_1^2 + \alpha_2 s_2^2}}$$

, wherein $\alpha_1$ and $\alpha_2$ are weight factors of $s_1$ and $s_2$ respectively, and $\alpha_1 + \alpha_2 = 1$, $\alpha_1 > 0$, $\alpha_2 > 0$.

8. The method according to any one of claims 1 to 7, wherein the method further comprises:
if it is determined, based on the fog feature information, that there is fog in the environment corresponding to the target image, generating indication information for turning on a fog light, or controlling to turn on a fog light.

9. The method according to any one of claims 1 to 8, wherein the target image is an image corresponding to a to-be-detected area in captured images, and the to-be-detected area comprises one or more of a skyline, a lane line blanking point area, or trees or buildings on both sides of a road.

10. A fog feature identification apparatus, configured to perform the method according to any one of claims 1 to 9.

11. A computer-readable storage medium, wherein the computer-readable storage medium stores a computer program, and when the computer program is executed by a processor, the method according to any one of claims 1 to 9 is implemented.

12. A computer program, wherein the computer program comprises instructions, and when the computer program is executed by a computer, the computer is enabled to perform the method according to any one of claims 1 to 9.

**Patentansprüche**

1. Computerumgesetztes Verfahren zum Identifizieren von Nebeleigenschaften, umfassend:

> Erlangen (S501) eines Zielbilds;
> Bestimmen (S502) von Graustufeneigenschaftsverteilungsinformationen in einem Dunkelkanalbild des Zielbilds basierend auf dem Dunkelkanalbild;
> Bestimmen (S503) von Farbeigenschaftsverteilungsinformationen in einem HSV-Farbraumbild des Zielbilds basierend auf dem HSV-Farbraumbild; und
> Bestimmen (S504) von Nebeleigenschaftsinformationen in dem Zielbild basierend auf den Graustufeneigenschaftsverteilungsinformationen und den Farbeigenschaftsverteilungsinformationen,
> wobei das Bestimmen (S502) der Graustufeneigenschaftsverteilungsinformationen in einem Dunkelkanalbild des Zielbilds basierend auf dem Dunkelkanalbild Folgendes umfasst:

Zählen, basierend auf dem Dunkelkanalbild des Zielbilds, einer Wahrscheinlichkeit $p(x_i|d)$, dass ein Pixelwert jedes Pixels in dem Dunkelkanalbild in ein Pixelwertintervall fällt, zu dem der Pixelwert gehört, wobei

$$p(x_i|d) = \frac{\text{sum}(x_i)}{\text{sum}(x_{i \in d})},$$

$x_i$ ein Pixel ist, dessen Pixelwert $i$ in dem Dunkelkanalbild ist, $\text{sum}(x_i)$ eine Gesamtanzahl von Pixeln ist, deren Pixelwert $i$ in dem Dunkelkanalbild ist, $x_{i \in d}$ ein Pixel ist, dessen Pixelwert in ein entsprechendes Pixelwertintervall $d$ in dem Dunkelkanalbild fällt, $\text{sum}(x_{i \in d})$ eine Gesamtanzahl von Pixeln ist, deren Pixelwerte in ein Pixelwertintervall fallen, zu dem der Pixelwert in dem Dunkelkanalbild gehört, und $d$ ein Pixelwertintervall [0, N] und ein Pixelwertintervall [N, 255] umfasst, wobei N ein voreingestellter Pixelwertschwellenwert ist, $0 < N < 255$, $0 \leq i \leq 255$ und sowohl N als auch $i$ eine Ganzzahl ist;
wobei das Bestimmen (S503) der Farbeigenschaftsverteilungsinformationen in einem HSV-Farbraumbild des Zielbilds basierend auf dem HSV-Farbraumbild Folgendes umfasst:

Berechnen eines Sättigungskoeffizienten von Variation $Q_S = \frac{\sigma(HSV_S)}{\mu(HSV_S)}$ und eines Wertkoeffizienten von Variation $Q_V = \frac{\sigma(HSV_V)}{\mu(HSV_V)}$ des HSV-Farbraumbilds des Zielbilds basierend auf dem HSV-Farbraumbild, wobei $\sigma(HSV_S)$ eine Standardabweichung von Pixelwerten von Pixeln eines S-Kanals in dem HSV-Farbraumbild ist, $\mu(HSV_S)$ ein Durchschnittswert der Pixelwerte der Pixel des S-Kanals in dem HSV-Farbraumbild ist, $\sigma(HSV_V)$ eine Standardabweichung von Pixelwerten von Pixeln eines V-Kanals in dem HSV-Farbraumbild ist und $\mu(HSV_V)$ ein Durchschnittswert von Pixelwerten von Pixeln des V-Kanals in dem HSV-Farbraumbild ist; und
wobei das Bestimmen (S504) von Nebeleigenschaftsinformationen in dem Zielbild basierend auf den Graustufeneigenschaftsverteilungsinformationen und den Farbeigenschaftsverteilungsinformationen Folgendes umfasst:

Berechnen einer ersten Metrik $E_1$ einer Nebeleigenschaft in dem Dunkelkanalbild gemäß einer Formel $E_1 = -\Sigma_{x_i \in w} p(x_i|d) \ln p(x_i|d)$ basierend auf der Wahrscheinlichkeit $p(x_i|d)$, dass ein Pixelwert jedes Pixels in dem Dunkelkanalbild in ein Pixelwertintervall fällt, zu dem der Pixelwert gehört, wobei $w$ alle Pixel in dem Dunkelkanalbild sind;
Berechnen eines zweiten Metrikwerts $E_2$ einer Nebeleigenschaft in dem HSV-Farbraumbild gemäß einer Formel $E_2 = e^{-\sqrt{Q_S^2 + Q_V^2}}$ basierend auf dem Sättigungskoeffizienten von Variation $Q_S = \frac{\sigma(HSV_S)}{\mu(HSV_S)}$ und dem Wertkoeffizienten von Variation $Q_V = \frac{\sigma(HSV_V)}{\mu(HSV_V)}$ des HSV-Farbraumbilds, wobei $e$ die Naturkonstante ist;
Berechnen eines Gesamtmetrikwerts der Nebeleigenschaft in dem Zielbild gemäß einer Formel $E = aE_1 + bE_2$, wobei $a$ und $b$ jeweils Gewichtungsfaktoren von $E_1$ und $E_2$ sind, $a + b = 1$, $a > 0$ und $b > 0$; und
wenn $E \leq \tau_0$, Bestimmen, dass sich Nebel in einer Umgebung befindet, die dem Zielbild entspricht, wobei $\tau_0$ ein voreingestellter Energieschwellenwert ist und $0 \leq \tau_0 \leq 1$ ist.

2. Verfahren nach Anspruch 1, wobei das Bestimmen (S502) der Graustufeneigenschaftsverteilungsinformationen in einem Dunkelkanalbild des Zielbilds basierend auf dem Dunkelkanalbild Folgendes umfasst:
Bestimmen von Pixelwerten von Pixeln in dem Dunkelkanalbild des Zielbilds und Zählen eines Verhältnisses einer Anzahl von Pixeln, die jedem Pixelwert entspricht, zu einer Gesamtanzahl von Pixeln in dem Dunkelkanalbild.

**3.** Verfahren nach Anspruch 2, wobei das HSV-Farbraumbild des Zielbilds einen Farbtonkanal, H-Kanal, einen Sättigungskanal, S-Kanal, und einen Wertkanal, V-Kanal, umfasst und das Bestimmen (S503) der Farbeigenschaftsverteilungsinformationen in einem HSV-Farbraumbild des Zielbilds basierend auf dem HSV-Farbraumbild Folgendes umfasst:

Bestimmen einer Standardabweichung von Pixelwerten von Pixeln mindestens eines Kanals in dem HSV-Farbraumbild des Zielbilds; und Bestimmen einer Farbverteilung in dem HSV-Farbraumbild basierend auf der Standardabweichung der Pixelwerte der Pixel des mindestens einen Kanals.

**4.** Verfahren nach Anspruch 2, wobei das HSV-Farbraumbild des Zielbilds einen Farbtonkanal, H-Kanal, einen Sättigungskanal, S-Kanal, und einen Wertkanal, V-Kanal, umfasst und das Bestimmen (S503) der Farbeigenschaftsverteilungsinformationen in einem HSV-Farbraumbild des Zielbilds basierend auf dem HSV-Farbraumbild Folgendes umfasst:

Bestimmen einer Standardabweichung und eines Durchschnittswerts von Pixelwerten von Pixeln mindestens eines Kanals in dem HSV-Farbraumbild des Zielbilds; und Bestimmen einer Farbverteilung in dem HSV-Farbraumbild basierend auf der Standardabweichung und dem Durchschnittswert der Pixelwerte der Pixel des mindestens einen Kanals.

**5.** Verfahren nach Anspruch 2, wobei das Bestimmen (S503) der Farbeigenschaftsverteilungsinformationen in einem HSV-Farbraumbild des Zielbilds basierend auf dem HSV-Farbraumbild Folgendes umfasst:

Bestimmen einer Standardabweichung und eines Durchschnittswerts von Pixelwerten von Pixeln eines S-Kanals und einer Standardabweichung und eines Durchschnittswerts von Pixelwerten von Pixeln eines V-Kanals des HSV-Farbraumbilds des Zielbilds; und Bestimmen einer Farbverteilung in dem HSV-Farbraumbild basierend auf der Standardabweichung und dem Durchschnittswert der Pixelwerte der Pixel des S-Kanals und der Standardabweichung und dem Durchschnittswert der Pixelwerte der Pixel des V-Kanals.

**6.** Verfahren nach einem der Ansprüche 3 bis 5, wobei das Bestimmen (S504) der Nebeleigenschaftsinformationen in dem Zielbild basierend auf den Graustufeneigenschaftsverteilungsinformationen und den Farbeigenschaftsverteilungsinformationen Folgendes umfasst: Berechnen eines ersten Metrikwerts einer Nebeleigenschaft in dem Dunkelkanalbild basierend auf dem Verhältnis der Anzahl von Pixeln, die jedem Pixelwert entsprechen, zu der Gesamtanzahl von Pixeln in dem Dunkelkanalbild und Berechnen eines zweiten Metrikwerts einer Nebeleigenschaft in dem HSV-Farbraumbild basierend auf der Farbverteilung in dem HSV-Farbraumbild; und Bestimmen der Nebeleigenschaftsinformationen in dem Zielbild basierend auf dem ersten Metrikwert und dem zweiten Metrikwert.

**7.** Verfahren nach einem der Ansprüche 1 bis 6, wobei das Verfahren ferner Folgendes umfasst:

Bestimmen eines Nebelwahrscheinlichkeitskoeffizienten $s_1$ eines geografischen Standorts der Umgebung, der dem Zielbild entspricht, und eines Nebelwahrscheinlichkeitskoeffizienten $s_2$ eines Wetters; und Bestimmen von $\tau_0$ gemäß einer Formel

$$\tau_0 = \tau_0 e^{-\sqrt{a_1 s_1^2 + a_2 s_2^2}}$$, wobei $\alpha_1$ und $\alpha_2$ jeweils Gewichtungsfaktoren von $s_1$ und $s_2$ sind und $\alpha_1 + \alpha_2 = 1$, $\alpha_1 > 0$, $\alpha_2 > 0$.

**8.** Verfahren nach einem der Ansprüche 1 bis 7, wobei das Verfahren ferner Folgendes umfasst: wenn basierend auf den Nebeleigenschaftsinformationen bestimmt wird, dass es Nebel in der Umgebung gibt, die dem Zielbild entspricht, Erzeugen von Anzeigeinformationen zum Einschalten einer Nebelleuchte oder zum Steuern, um eine Nebelleuchte einzuschalten.

**9.** Verfahren nach einem der Ansprüche 1 bis 8, wobei das Zielbild ein Bild ist, das einem zu erkennenden Bereich in erfassten Bildern entspricht, und der zu erkennende Bereich eines oder mehrere von einem Horizont, einem Fahrbahnlinienausblendpunktbereich oder Bäumen oder Gebäuden auf beiden Seiten einer Straße umfasst.

**10.** Gerät zum Identifizieren von Nebeleigenschaften, das dazu konfiguriert ist, das Verfahren nach einem der Ansprüche 1 bis 9 durchzuführen.

**11.** Computerlesbares Speichermedium, wobei das computerlesbare Speichermedium ein Computerprogramm speichert und, wenn das Computerprogramm durch einen Prozessor ausgeführt wird, das Verfahren nach einem der Ansprüche 1 bis 9 umgesetzt wird.

**12.** Computerprogramm, wobei das Computerprogramm Anweisungen umfasst und, wenn das Computerprogramm durch einen Computer ausgeführt wird, es dem Computer ermöglicht wird, das Verfahren nach einem der Ansprüche 1 bis 9 durchzuführen.

**Revendications**

1. Procédé d'identification de caractéristiques de brouillard mis en œuvre par ordinateur, comprenant :

l'obtention (S501) d'une image cible ;
la détermination (S502) d'informations de distribution de caractéristiques en niveaux de gris dans une image de canal sombre de l'image cible sur la base de l'image de canal sombre ;
la détermination (S503) d'informations de distribution de caractéristiques de couleur dans une image d'espace colorimétrique HSV de l'image cible sur la base de l'image d'espace colorimétrique HSV ; et
la détermination (S504) d'informations de caractéristiques de brouillard dans l'image cible sur la base des informations de distribution de caractéristiques en niveaux de gris et des informations de distribution de caractéristiques de couleur,
dans lequel la détermination (S502) d'informations de distribution de caractéristiques en niveaux de gris dans une image de canal sombre de l'image cible sur la base de l'image de canal sombre comprend :

le calcul, sur la base de l'image de canal sombre de l'image cible, d'une probabilité $p(x_i|d)$ qu'une valeur de pixel de chaque pixel dans l'image de canal sombre tombe dans un intervalle de valeur de pixel auquel appartient la valeur de pixel, dans lequel

$$p(x_i|d) \ = \ \frac{\mathrm{sum}(x_i)}{\mathrm{sum}(x_{i \in d})},$$

$x_i$ est un pixel dont la valeur de pixel est i dans l'image de canal sombre, $\mathrm{sum}(x_i)$ est une quantité totale de pixels dont la valeur de pixel est i dans l'image de canal sombre, $x_{i \in d}$ est un pixel dont la valeur de pixel tombe dans un intervalle de valeur de pixel correspondant d dans l'image de canal sombre, $\mathrm{sum}(x_{i \in d})$ est une quantité totale de pixels dont les valeurs de pixel tombent dans un intervalle de valeur de pixel auquel la valeur de pixel appartient dans l'image de canal sombre, et d comprend un intervalle de valeur de pixel [0, N] et un intervalle de valeur de pixel (N, 255], où N est un seuil de valeur de pixel prédéfini, $0 < N < 255$, $0 \leq i \leq 255$, et N et i sont tous deux des entiers ;
dans lequel la détermination (S503) d'informations de distribution de caractéristiques de couleur dans une image d'espace colorimétrique HSV de l'image cible sur la base de l'image d'espace colorimétrique HSV comprend :

le calcul d'un coefficient de variation de saturation $Q_S \ = \ \frac{\sigma(\mathrm{HSV}_S)}{\mu(\mathrm{HSV}_S)}$ et d'un coefficient de variation de valeur $Q_V \ = \ \frac{\sigma(\mathrm{HSV}_V)}{\mu(\mathrm{HSV}_V)}$ de l'image d'espace colorimétrique HSV de l'image cible sur la base de l'image d'espace colorimétrique HSV, où $\sigma(\mathrm{HSV}_S)$ est un écart type de valeurs de pixels de pixels d'un canal S dans l'image d'espace colorimétrique HSV, $\mu(\mathrm{HSV}_S)$ est une valeur moyenne des valeurs de pixels des pixels du canal S dans l'image d'espace colorimétrique HSV, $\sigma(\mathrm{HSV}_V)$ est un écart type de valeurs de pixels de pixels d'un canal V dans l'image d'espace colorimétrique HSV, et $\mu(\mathrm{HSV}_V)$ est une valeur moyenne de valeurs de pixels de pixels du canal V dans l'image d'espace colorimétrique HSV ; et
dans lequel la détermination (S504) d'informations de caractéristiques de brouillard dans l'image cible sur la base des informations de distribution de caractéristiques en niveaux de gris et des informations de distribution de caractéristiques de couleur comprend :

le calcul d'une première métrique $E_1$ d'une caractéristique de brouillard dans l'image de canal sombre selon une formule $E_1 = -\Sigma_{x_i \in w} p(x_i|d) \ln p(x_i|d)$ basée sur la probabilité $p(x_i|d)$ qu'une valeur de pixel de chaque pixel dans l'image de canal sombre tombe dans un intervalle de valeur de pixel auquel appartient la valeur de pixel, où w représente tous les pixels dans l'image de canal sombre ;
le calcul d'une seconde valeur métrique $E_2$ d'une caractéristique de brouillard dans l'image d'espace colorimétrique HSV selon une formule $E_2 \ = \ e^{-\sqrt{Q_S^2 + Q_V^2}}$ sur la base du coefficient de variation de saturation

$$Q_{S} = \frac{\sigma(HSV_{S})}{\mu(HSV_{S})}$$ et du coefficient de variation de valeur $$Q_{V} = \frac{\sigma(HSV_{V})}{\mu(HSV_{V})}$$ de l'espace colorimétrique HSV, dans lequel e est la constante naturelle ; le calcul d'une valeur métrique totale de la caractéristique de brouillard dans l'image cible selon une formule E = $aE_1$ + $bE_2$, dans lequel a et b sont des facteurs de pondération de $E_1$ et $E_2$ respectivement, a + b = 1, a > 0 et b > 0 ; et si E ≤ $\tau_0$, la détermination qu'il y a du brouillard dans un environnement correspondant à l'image cible, où $\tau_0$ est un seuil d'énergie prédéfini et 0 ≤ $\tau_0$ ≤ 1.

2. Procédé selon la détermination 1, dans lequel la détermination (S502) d'informations de distribution de caractéristiques en niveaux de gris dans une image de canal sombre de l'image cible sur la base de l'image de canal sombre comprend : la détermination de valeurs de pixels de pixels dans l'image de canal sombre de l'image cible, et le calcul d'un rapport d'une quantité de pixels correspondant à chaque valeur de pixel à une quantité totale de pixels dans l'image de canal sombre.

3. Procédé selon la revendication 2, dans lequel l'image d'espace colorimétrique HSV de l'image cible comprend un canal de teinte H, un canal de saturation S et un canal de valeur V, et la détermination (S503) d'informations de distribution de caractéristiques de couleur dans une image d'espace colorimétrique HSV de l'image cible sur la base de l'image d'espace colorimétrique HSV comprend :

la détermination d'un écart type de valeurs de pixels d'au moins un canal dans l'image d'espace colorimétrique HSV de l'image cible ; et la détermination de la distribution de couleurs dans l'image d'espace colorimétrique HSV sur la base de l'écart type des valeurs de pixels des pixels de l'au moins un canal.

4. Procédé selon la revendication 2, dans lequel l'image d'espace colorimétrique HSV de l'image cible comprend un canal de teinte H, un canal de saturation S et un canal de valeur V, et la détermination (S503) d'informations de distribution de caractéristiques de couleur dans une image d'espace colorimétrique HSV de l'image cible sur la base de l'image d'espace colorimétrique HSV comprend :

la détermination d'un écart type et d'une valeur moyenne de valeurs de pixels d'au moins un canal dans l'image d'espace colorimétrique HSV de l'image cible ; et la détermination de la distribution de couleurs dans l'image d'espace colorimétrique HSV sur la base de l'écart type et de la valeur moyenne des valeurs de pixels des pixels de l'au moins un canal.

5. Procédé selon la revendication 2, dans lequel la détermination (S503) d'informations de distribution de caractéristiques de couleur dans une image d'espace colorimétrique HSV de l'image cible sur la base de l'image d'espace colorimétrique HSV comprend :

la détermination d'un écart type et d'une valeur moyenne de valeurs de pixels de pixels d'un canal S, et d'un écart type et d'une valeur moyenne de valeurs de pixels de pixels d'un canal V de l'image d'espace colorimétrique HSV de l'image cible ; et la détermination de la distribution de couleurs dans l'image d'espace colorimétrique HSV sur la base de l'écart type et de la valeur moyenne des valeurs de pixels des pixels du canal S et de l'écart type et de la valeur moyenne des valeurs de pixels des pixels du canal V.

6. Procédé selon l'une quelconque des revendications 3 à 5, dans lequel la détermination (S504) d'informations de caractéristiques de brouillard dans l'image cible sur la base des informations de distribution de caractéristiques en niveaux de gris et des informations de distribution de caractéristiques de couleur comprend :

le calcul d'une première valeur métrique d'une caractéristique de brouillard dans l'image de canal sombre sur la base du rapport de la quantité de pixels correspondant à chaque valeur de pixel sur la quantité totale de pixels dans l'image de canal sombre, et le calcul d'une seconde valeur métrique d'une caractéristique de brouillard dans l'image d'espace colorimétrique HSV sur la base de la distribution de couleurs dans l'image d'espace colorimétrique HSV ; et la détermination des informations de caractéristique de brouillard dans l'image cible sur la base de la première valeur métrique et de la seconde valeur métrique.

7. Procédé selon l'une quelconque des revendications 1 à 6, dans lequel le procédé comprend également :

la détermination d'un coefficient de probabilité de brouillard $s_1$ d'un emplacement géogra-

phique de l'environnement correspondant à l'image cible et d'un coefficient de probabilité de brouillard $s_2$ de la météo ; et

la détermination $\tau_0$ selon une formule

$$\tau_0 = \tau_0 e^{-\sqrt{a_1 s_1^2 + a_2 s_2^2}}$$, où $\alpha_1$ et $\alpha_2$ sont des facteurs de pondération de $s_1$ et $s_2$ respectivement, et $\alpha_1 + \alpha_2 = 1$, $\alpha_1 > 0$, $\alpha_2 > 0$.

8. Procédé selon l'une quelconque des revendications 1 à 7, dans lequel le procédé comprend également :
s'il est déterminé, sur la base des informations de caractéristiques de brouillard, qu'il y a du brouillard dans l'environnement correspondant à l'image cible, la génération d'informations d'indication pour allumer un feu antibrouillard, ou commander l'allumage d'un feu antibrouillard.

9. Procédé selon l'une quelconque des revendications 1 à 8, dans lequel l'image cible est une image correspondant à une zone à détecter dans des images capturées, et la zone à détecter comprend un ou plusieurs éléments parmi un horizon, une zone de point de suppression de ligne de voie, ou des arbres ou des bâtiments des deux côtés d'une route.

10. Appareil d'identification de caractéristiques de brouillard, configuré pour réaliser le procédé selon l'une quelconque des revendications 1 à 9.

11. Support de stockage lisible par ordinateur, dans lequel le support de stockage lisible par ordinateur stocke un programme informatique, et lorsque le programme informatique est exécuté par un processeur, le procédé selon l'une quelconque des revendications 1 à 9 est mis en œuvre.

12. Programme informatique, dans lequel le programme informatique comprend des instructions, et lorsque le programme informatique est exécuté par un ordinateur, l'ordinateur est activé pour réaliser le procédé selon l'une quelconque des revendications 1 à 9.

Vehicle

Fog lights

Fog

Camera

FIG. 1

FIG. 2

FIG. 3

Vehicle 100

Drive system 157   Sensing system 159   Control system 161   Peripheral system 163   Light system 165

101

Computer systems

System memory 135

OS 137

Shell 139

Kernel 141

Application 143

Automated driving–related program 147

Processor 103

Hard disk drive 133

Hard disk drive interface 131

System bus 105

Display adapter 107

Bus bridge 111

I/O BUS

I/O interface 115

USB interface 125

Network interface 129

Power supply system 110

Display 109

Input device 117

Media tray 121

Transceiver 123

Camera 155

Sensor 153

Network 127

Deploying server 149

FIG. 4

EP 4 044 112 B1

35

```
┌─────────────────────────────────────────────────────────┐
│                                                         │    ╱ S501
│              Obtain a target image                      │   ╱
│                                                         │
└─────────────────────────────────────────────────────────┘
                          │
                          ▼
┌─────────────────────────────────────────────────────────┐
│                                                         │    ╱ S502
│  Determine grayscale feature distribution information   │   ╱
│  in a dark channel image of the target image based on   │
│              the dark channel image                     │
└─────────────────────────────────────────────────────────┘
                          │
                          ▼
┌─────────────────────────────────────────────────────────┐
│                                                         │    ╱ S503
│  Determine color feature distribution information in    │   ╱
│  an HSV color space image of the target image based on  │
│             the HSV color space image                   │
└─────────────────────────────────────────────────────────┘
                          │
                          ▼
┌─────────────────────────────────────────────────────────┐
│                                                         │    ╱ S504
│  Determine fog feature information in the target image  │   ╱
│  based on the grayscale feature distribution            │
│  information and the color feature distribution         │
│                  information                             │
└─────────────────────────────────────────────────────────┘
                          │
                          ▼
┌─ ─ ─ ─ ─ ─ ─ ─ ─ ─ ─ ─ ─ ─ ─ ─ ─ ─ ─ ─ ─ ─ ─ ─ ─ ─ ─ ─ ┐
│                                                         │    ╱ S505
│  If it is determined, based on the fog feature         │   ╱
│  information, that there is fog in an environment       │
│  corresponding to the target image, generate indication │
│  information for turning on a fog light, or control to  │
│  turn on a fog light                                    │
└─ ─ ─ ─ ─ ─ ─ ─ ─ ─ ─ ─ ─ ─ ─ ─ ─ ─ ─ ─ ─ ─ ─ ─ ─ ─ ─ ─ ┘
```

FIG. 5

Target
image
(to-be-
detected
area)

Target
image
(to-be-
detected
area)

FIG. 6

Target image

R channel

G channel

B channel

Dark channel image

9000
8000
7000
6000
5000
4000
3000
2000
1000
0

0   0.1   0.2   0.3   0.4   0.5   0.6   0.7   0.8   0.9

Grayscale feature
distribution information

A. Establish a dark channel

B. Extract a fog feature

FIG. 7

Clear sample (clear sample)
Clear fit curve (clear fit curve)
Foggy fit curve (foggy fit curve)
Number of image (number of images)
Foggy cross estimation of HSV
(foggy cross estimation of HSV)

Target image

A. HSV color space image

B. Color feature distribution information

FIG. 8

Step 1:
Inputs:
1. Images captured by a dashboard camera
2. Map information
3. Weather forecast information

Step 2:
Detect a to-be-detected area

Step 3: Extract a dark channel fog feature
A. Construct a dark channel image
B. Extract the dark channel fog feature

Step 4: Extract an HSV fog feature
A. HSV image conversion
B. Extract the HSV fog feature

Step 5:
Feature fusion

Step 6:
Determine whether there is fog. If there is fog, a fog light indicator flashes to prompt a driver to turn on fog lights

FIG. 9

Fog feature identification apparatus 20

```
                                                    ┌ ─ ─ ─ ─ ┐ ╱ 205
                                                    |  Fourth   |
                                                    | determining unit |
                                                    └ ─ ─ ─ ─ ┘
                                                         │
                                                    ┌ ─ ─ ─ ─ ┐ ╱ 206
                                                    | Fifth determining |
                                                    |   unit    |
                                                    └ ─ ─ ─ ─ ┘
                          ┌──────────┐ ╱ 202              │
                          │  First determining │           │ ╱ 204
                          │   unit    │         ┌──────────┐        ┌ ─ ─ ─ ─ ┐ ╱ 207
  ┌──────────┐ ╱ 201      └──────────┘         │  Third determining │       |  Fog light  |
  │ Obtaining unit │──┤                    ├───│   unit    │────────| indication unit |
  └──────────┘         ┌──────────┐ ╱ 203      └──────────┘        └ ─ ─ ─ ─ ┘
                          │  Second   │
                          │ determining unit │
                          └──────────┘
```

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

•   CN 201911056178

**Non-patent literature cited in the description**

•   **JIANG YUTONG et al.** Fog Density Estimation and Image Defogging Based on Surrogate Modeling for Optical Depth. *IEEE TRANSACTIONS ON IMAGE PROCESSING*, 01 July 2017, vol. 26 (7), 3397-3409

•   Haze weather recognition based on multiple features and Random Forest. **FAN XUE et al.** 2018 International Conference on Security, Pattern Analysis, and Cybernetics (SPAC). IEEE, 14 December 2018, 485-488

•   Image based fog detection in vehicles. **MARIO PAVLIC et al.** 2012 Intelligent Vehicles Symposium. IEEE, 03 June 2012, 1132-1137